# EUROPÄISCHE PATENTANMELDUNG

(11) **EP 3 318 377 A1**
(43) Veröffentlichungstag der Anmeldung: **09.05.2018**
(21) Anmeldenummer: 17198802.5
(22) Anmeldetag: 27.10.2017
(51) Int. Cl.: B27D 5/00, B29C 65/14, H05B 6/64

(54) **VORRICHTUNG ZUR ERWÄRMUNG EINER FUNKTIONSSCHICHT**

(30) Priorität: 03.11.2016 DE 102016221538
(71) Anmelder: HOMAG GmbH, 72296 Schopfloch (DE)
(72) Erfinder: Rohde, Domingo, 24111 Kiel (DE)
(74) Vertreter: Grauel, Andreas

(57) **Zusammenfassung**

Die Erfindung betrifft eine Vorrichtung (200) zur Erwärmung einer Funktionsschicht eines Beschichtungsmaterials (220), wie einer Oberflächenbeschichtung oder eines Kantenbandes, insbesondere zum Aufbringen des Beschichtungsmaterials auf eine Fläche eines Werkstücks, mit einer Mikrowellenquelle und mit einem Applikator, wobei in der Mikrowellenquelle erzeugte Mikrowellenstrahlung dem Applikator zuführbar ist, wobei in dem Applikator ein Mikrowellenfeld aufgrund der zugeführten Mikrowellenstrahlung erzeugbar ist, wobei das Beschichtungsmaterial (220) durch den Applikator durchführbar ist, insbesondere durch einen Materialkanal (201), welcher den Applikator durchquert, so dass die Funktionsschicht des Beschichtungsmaterials (220) im Mikrowellenfeld innerhalb des Applikators erwärmbar ist, wobei eine Führungsvorrichtung (210, 211) mit einem ersten Führungsmittel (210) und gegebenenfalls mit einem zweiten Führungsmittel (211) vorgesehen ist, wobei das Beschichtungsmaterial (220) entlang des zumindest einen Führungsmittels (210, 211) durch den Applikator verlagerbar geführt ist, wobei zumindest eine Zusatzwärmequelle (212, 213) im Applikator angeordnet ist, um das Beschichtungsmaterial zusätzlich lokal zu erwärmen.

## Beschreibung

### Technisches Gebiet

Die Erfindung betrifft eine Vorrichtung zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks.

### Stand der Technik

Im Stand der Technik ist es bekannt, auf Werkstücke Beschichtungen aufzubringen. Dabei sind die Werkstücke beispielsweise insbesondere plattenförmige, stabförmige oder dreidimensional aus Holz, Holzwerkstoffen, Kunststoff oder Ähnlichem hergestellte Elemente, wie sie beispielsweise im Möbelbau oder bei der Herstellung von Bauelementen, wie beispielsweise Fenster- oder Fußbodenelementen, verwendbar sind.

Die Beschichtungen können dabei flächige Beschichtungen zur Beschichtung von zumindest einer flächigen Breitseite des Werkstücks oder so genannte Kantenbänder zur Beschichtung von zumindest einer Schmalseite des Werkstücks sein.

Dabei ist es bekannt, dass die Beschichtung aus einer Oberflächenschicht und einer Funktionsschicht besteht, wobei die Funktionsschicht zum Verbinden der Beschichtung mit dem Werkstück dient. Dazu ist die Funktionsschicht zu erwärmen oder zu aktivieren, damit sie ihre klebenden Eigenschaften annimmt, so dass der Fügeprozess gezielt vorgenommen werden kann.

Im Stand der Technik ist die Aktivierung der Funktionsschicht mittels Laserstrahlen oder mittels heißer Druckluft bekannt. Die Aktivierung mittels Laserstrahlen hat ihre Vorteile in der punktgenauen Applizierung des Laserstrahls zur punktgenau gesteuerten Aktivierung. Die Vorrichtung zur Aktivierung mittels Laserstrahlen hat jedoch den Nachteil, dass die Anwendung ihre Vorteile eher erst bei hohen Stückzahlen wirtschaftlich zeigt. Auch ist es nachteilig, dass die durch den Laser applizierte Energie mit der Eindringtiefe der Laserstrahlung in das Material der Funktionsschicht abnimmt. Die vollständige Aktivierung der Funktionsschicht erfolgt dann ausgehend von der Oberfläche mittels Wärmeleitung in die Tiefe der Funktionsschicht, um eine gleichmäßige Erwärmung oder Aktivierung der Funktionsschicht zu erreichen.

Auch ist die Aktivierung über heiße Druckluft im Stand der Technik bekannt. Die DE 10 2011 015 898 offenbart eine Vorrichtung zur Erzeugung heißer Druckluft, welche auf ein Kantenband geströmt wird, um die Funktionsschicht zu erwärmen und damit zu aktivieren. Dabei wird eine erhebliche Menge Druckluft auf hohe Temperaturen zu erwärmen sein, um die Funktionsschicht im Durchlauf durch die Vorrichtung zu erwärmen oder zu aktivieren. Solche Vorrichtungen verbrauchen erhebliche Energiemengen, um die benötigten hohen Luftmengen in einem Wärmeübertrager auf deutlich über 400°C zu erwärmen, wobei ein großer Teil der Energie aufgrund der Gestaltung der Vorrichtung im Wärmeübertrager über beispielsweise Wärmestrahlung oder Ähnliches parasitär abgeführt wird. Auch bewirkt der hochvolumige heiße Luftstrom, dass die Umgebung der Vorrichtung hohen Temperaturen ausgesetzt ist, was einen erheblichen Aufwand an Klimatisierung nach sich zieht. Auch zeigen die Vorrichtungen zur Aktivierung mittels Heißluft einen hohen Geräuschpegel bei der Erzeugung und Ausströmung der unter Druck stehenden Heißluft, was für das Bedienpersonal der Vorrichtung nachteilig ist und einen erheblichen Aufwand für die Geräuschdämmung nach sich zieht. Bei der Nutzung von Heißluft zeigt sich, dass aufgrund der hohen Heißlufttemperaturen die obere Schicht der Funktionsschicht bei Temperatur der Heißluft von 400°C bis 500°C stark verflüssigt wird und durch die starke Luftströmung teilweise von der Funktionsschicht abgelöst wird. Diese abgelösten Teile der Funktionsschicht finden sich als Verschmutzungen auf den umliegenden Bauteilen wieder und reduzieren die zur Verklebung verfügbare Klebermenge. Auch ist es nachteilig, dass die durch die Heißluft applizierte Energie nur auf die Oberfläche wirkt und dann mittels Wärmeleitung in die Tiefe der Funktionsschicht weitergeleitet werden muss, um eine durchgängige Erwärmung der Funktionsschicht auf eine Temperatur von im Wesentlichen der Prozesstemperatur oder mehr zu erreichen. Dabei entsteht ein starker Temperaturgradient zwischen der Oberfläche der Funktionsschicht und der Rückseite der Funktionsschicht, die an die Dekorschicht des Beschichtungsmaterials grenzt.

Die DE 10 2014 213 526 offenbart eine Vorrichtung zur Erwärmung einer Funktionsschicht eines Beschichtungsmaterials zum Aufbringen des Beschichtungsmaterials auf eine Fläche eines Werkstücks, mit einer Mikrowellenquelle, einem Applikator und einem Mikrowellenkanal zur Zuführung der in der Mikrowellenquelle erzeugten Mikrowellenstrahlung zu dem Applikator, wobei in dem Applikator ein Mikrowellenfeld aufgrund der zugeführten Mikrowellenstrahlung erzeugbar ist, wobei der Applikator zumindest einen Materialkanal aufweist, welcher den Applikator durchquert und durch welchen das Beschichtungsmaterial durchführbar ist, so dass die Funktionsschicht des Beschichtungsmaterials im Mikrowellenfeld innerhalb des Applikators erwärmt wird. Dabei wird das Kantenband durch den Materialkanal geführt. Bei einem eher nicht geeigneten Temperaturprofil besteht die Gefahr der Verschmutzung des Materialkanals und darüber hinaus besteht die Gefahr, dass das Beschichtungsmaterial bzw. die Funktionsschicht vollständig oder in Teilbereichen nicht ausreichend erwärmt ist oder zu stark erwärmt ist, so dass die Haftung am Werkstück nicht ausreichend ist oder das Material der Funktionsschicht degradiert.

Dabei wird das zu erwärmende Beschichtungsmaterial durch Führungsmittel durch das Mikrowellenfeld geführt. Dabei zeigt sich, dass der Randbereich, der unmittelbar in das jeweilige Führungsmittel eingreift, eine Temperatur aufweisen soll, die relativ gering ist, damit die Funktionsschicht des Beschichtungsmaterials noch relativ fest ist und das oder die Führungsmittel nicht durch zu heißes Beschichtungsmaterial beschmutzt wird bzw. werden. Der neben dem Randbereich befindliche Bereich soll hingegen möglichst nahe an dem Randbereich bereits auf eine hohe Aktivierungstemperatur erwärmt werden, damit die Verklebung des Beschichtungsmaterials über seine möglichst volle Breite problemlos stattfinden kann. Allerdings zeigt sich, dass der dem Randbereich benachbarte Bereich teilweise jedoch nicht so stark erwärmt ist, wie es erwünscht wäre.

### Darstellung der Erfindung, Aufgabe, Lösung, Vorteile

Es ist die Aufgabe der Erfindung, eine Vorrichtung zur Erwärmung einer Funktionsschicht eines Beschichtungsmaterials, wie insbesondere einer Oberflächenbeschichtung oder eines Kantenbandes, insbesondere zum Aufbringen des Beschichtungsmaterials auf eine Fläche eines Werkstücks, zu schaffen, die einfach und kompakt ausgebildet ist und dennoch hinsichtlich der Temperierung des Beschichtungsmaterials weiter verbessert ist. Auch betrifft die Erfindung ein Verfahren zur Erwärmung einer Funktionsschicht eines Beschichtungsmaterials.

Die Aufgabe zu der Vorrichtung wird mit den Merkmalen von Anspruch 1 gelöst.

Ein Ausführungsbeispiel der Erfindung betrifft eine Vorrichtung zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks, mit einer Mikrowellenquelle und mit einem Applikator, wobei in der Mikrowellenquelle erzeugte Mikrowellenstrahlung dem Applikator zuführbar ist, wobei in dem Applikator ein Mikrowellenfeld aufgrund der zugeführten Mikrowellenstrahlung erzeugbar ist, wobei das Beschichtungsmaterial durch den Applikator durchführbar ist, insbesondere durch einen Materialkanal, welcher den Applikator durchquert, so dass die Funktionsschicht des Beschichtungsmaterials im Mikrowellenfeld innerhalb des Applikators erwärmbar ist, wobei eine Führungsvorrichtung mit einem ersten Führungsmittel und gegebenenfalls mit einem zweiten Führungsmittel vorgesehen ist, wobei das Beschichtungsmaterial entlang des zumindest einen Führungsmittels durch den Applikator verlagerbar geführt ist, wobei zumindest eine Zusatzwärmequelle im Applikator angeordnet ist, um das Beschichtungsmaterial zusätzlich lokal zu erwärmen.

Durch die zumindest eine Zusatzwärmequelle, bevorzugt durch zwei Zusatzwärmequellen, wird erreicht, dass das Temperaturprofil des Beschichtungsmaterials bzw. der Funktionsschicht des Beschichtungsmaterials gezielt moduliert werden kann, um eine verbesserte Verarbeitung des Beschichtungsmaterials bei kostengünstiger Materialausnutzung zu erreichen.

Dabei wird zur prozessgerechten Modulierung des Temperaturprofils des Beschichtungsmaterials bzw. der Funktionsschicht des Beschichtungsmaterials senkrecht zur Vorschubrichtung des Beschichtungsmaterials der nachfolgend beschriebene Kombinationseffekt bzw. Multiplikatoreffekt genutzt.

Das Profil des Mikrowellenfelds bzw. der elektrischen Feldstärke des Mikrowellenfelds in Prozessrichtung entspricht etwa einer sin²-Funktion, Die Absorption ε" des Materials des Beschichtungsmaterials, insbesondere von TPU, ist abhängig von der Temperatur und steigt von 20°C bis 220°C etwa linear an. Unter Ausnutzung dieser beiden physikalischen Merkmale kann durch eine zusätzliche lokale Erwärmung des Beschichtungsmaterials in dem Bereich des elektrischen Feldes vor dem Maximum des elektrischen Feldes des Mikrowellenfelds in Prozessrichtung ein Multiplikatoreffekt zur lokalen Erwärmung des Beschichtungsmaterials bzw. der Funktionsschicht generiert werden.

Die lokale Erwärmung erzeugt eine lokale Temperaturerhöhung gegenüber dem restlichen Beschichtungsmaterial, so dass im Mikrowellenfeld der lokal erwärmte Bereich aufgrund des höheren ε" durch das Mikrowellenfeld stärker erwärmt wird als das restliche Beschichtungsmaterial und sich aufgrund der Wärmeleitung ausdehnt. Dadurch wird also eine Modulation der Temperatur des Beschichtungsmaterials erreicht, wobei im Bereich der Anordnung bzw. Wirkung der Zusatzwärmequelle bzw. der Zusatzwärmequellen eine lokale Temperaturerhöhung des Beschichtungsmaterials bzw. der Funktionsschicht des Beschichtungsmaterials generiert werden kann.

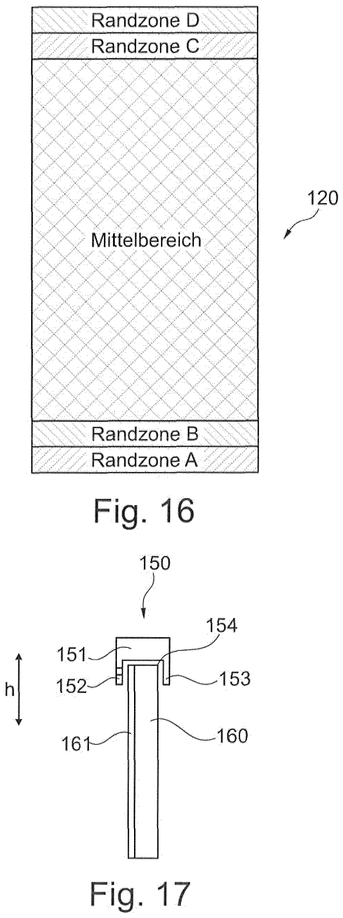

Bei dem oben erwähnten Beispiel von thermoplastischem Polyurethan (TPU) als Beschichtungsmaterial kann eine lokale zusätzliche Erwärmung des Beschichtungsmaterials bzw. der Funktionsschicht des Beschichtungsmaterials von beispielsweise 15 K bis 25 K zu einer lokalen Erhöhung des ε" von ca. 0,1 führen. Dabei kann es durchaus ausreichen, wenn nur die oberen 10µm bis 50µm der Funktionsschicht durch die Zusatzwärmequelle erwärmt werden. Die vollständige Erwärmung der Funktionsschicht in diesem Bereich erfolgt dann im Nachgang durch den Durchlauf durch das Mikrowellenfeld des Applikators aufgrund des erhöhten ε". Der lokale Bereich mit einem erhöhtem ε" durchläuft den Applikator und wird dabei deutlich stärker erwärmt, als die umliegenden Bereiche der Funktionsschicht des Beschichtungsmaterials. Das führt im Ergebnis zu einer Erhöhung des ΔT in der oberen und in der unteren Randzone B, C verglichen zu dem Mittelbereich des Beschichtungsmaterials. Zur Definition der Randzone bzw. des Mittelbereichs siehe Figur 16 und die diesbezügliche Beschreibung. So kann es beispielsweise sein, dass eine lokale Temperaturerhöhung von 15 K im Bereich der zusätzlichen Heizvorrichtung in eine Temperaturerhöhung von 45 K nach dem Durchlauf des Applikators vergrößert wird.

Vorteilhaft ist es dabei, wenn die zumindest eine Zusatzwärmequelle im Applikator benachbart zu zumindest einem Führungsmittel angeordnet ist. Dann kann ein Randbereich zusätzlich erwärmt werden.

Auch ist es vorteilhaft, wenn die zumindest eine Zusatzwärmequelle im Applikator zwischen den beiden Führungsmitteln angeordnet ist. So kann auch ein mittlerer Bereich erwärmt werden.

Entsprechend ist es auch vorteilhaft, wenn eine erste Zusatzwärmequelle und eine zweite Zusatzwärmequelle vorgesehen sind, jeweils benachbart zu dem ersten Führungsmittel und zu dem zweiten Führungsmittel. Dadurch kann das Beschichtungsmaterial im Bereich beider Randzonen zusätzlich erwärmt werden, was beiderseits eine günstige Temperaturverteilung ergibt.

Auch ist es vorteilhaft, wenn eine dritte Zusatzwärmequelle zwischen dem ersten Führungsmittel und dem zweiten Führungsmittel und zwischen der ersten Zusatzwärmequelle und der zweiten Zusatzwärmequelle angeordnet ist.

Auch ist es vorteilhaft, wenn die erste Zusatzwärmequelle und/oder die zweite Zusatzwärmequelle im Materialkanal angeordnet ist bzw. sind. Dadurch kann die Wärme durch die erste und/oder zweite Zusatzwärmequelle unmittelbar auf das Beschichtungsmaterial einwirken bzw. auf dieses appliziert werden, was energetisch günstig ist, weil nur kurze Wege vorliegen und parasitäre Effekte gering sind.

Auch ist es zweckmäßig, wenn die erste Zusatzwärmequelle und/oder die zweite Zusatzwärmequelle sich zumindest teilweise entlang des jeweiligen Führungsmittels in einer Vorschubrichtung des Beschichtungsmaterials erstrecken. Dadurch kann es vorteilhaft sein, dass die Wärme über einen längeren Bereich in Vorschubrichtung auf das Beschichtungsmaterial einwirken kann. So wird eine effektivere Erwärmung erreicht.

Ebenso ist es zweckmäßig, wenn die erste Zusatzwärmequelle und/oder die zweite Zusatzwärmequelle im Applikator in Vorschubrichtung des Beschichtungsmaterials vor oder etwa in der Position des Maximums des Mikrowellenfeldes angeordnet ist bzw. sind. Dadurch wird vorteilhaft erreicht, dass das mit der ersten Zusatzwärmequelle und/oder mit der zweiten Zusatzwärmequelle vorgewärmte Beschichtungsmaterial den Bereich des Applikators noch passiert, in welchem eine maximale Feldstärke noch vorliegt, damit der Aufwärmeffekt durch das Mikrowellenfeld noch von dem erhöhten ε" profitieren kann.

Auch ist es vorteilhaft, wenn die erste Zusatzwärmequelle und/oder die zweite Zusatzwärmequelle als Heißluftwärmequelle, als optische Wärmequelle, als Laserlichtquelle, als LED-Lichtquelle, als Lampen, als Lampenanordnung, als Mikrowellenquelle, als Plasmaquelle ausgebildet ist oder eine Kontaktwärmequelle ist bzw. sind. Dadurch kann jeweils eine lokale Erwärmung des Beschichtungsmaterials erreicht werden, wobei die Wahl der Zusatzwärmequelle von den Materialbedingungen des Beschichtungsmaterials abhängen kann.

Besonders vorteilhaft ist es, wenn die Heißluftwärmequelle als Heißluftkanal mit zumindest einer Luftaustrittsöffnung ausgeführt ist, so dass aus der zumindest einen Luftaustrittsöffnung Heißluft gegen die Funktionsschicht bzw. gegen das Beschichtungsmaterial strömen kann. Dadurch wird eine lokale Erwärmung des Beschichtungsmaterials bzw. dessen Funktionsschicht erreicht, wobei durch die Anzahl, Form und/oder Lage der zumindest einen Luftaustrittsöffnung die lokal zu erwärmende Zone des Beschichtungsmaterials definiert werden kann.

Auch ist es zweckmäßig, wenn die erste Zusatzwärmequelle und/oder die zweite Zusatzwärmequelle im Applikator und/oder im Materialkanal stationär angeordnet ist bzw. sind. Dadurch kann eine einfache Konstruktion gewählt werden, insbesondere bezüglich der unteren der beiden Zusatzwärmequellen. Auch ist die stationäre Anordnung vorteilhaft, wenn nur Beschichtungsmaterialien verarbeitet werden, die die gleiche Größe haben. So kann die Lage der Zusatzwärmequellen auf diese Größe angepasst werden.

Auch ist es vorteilhaft, wenn die erste Zusatzwärmequelle und/oder die zweite Zusatzwärmequelle im Applikator und/oder im Materialkanal verlagerbar angeordnet ist bzw. sind, wie insbesondere mit dem jeweils benachbarten Führungsmittel verlagerbar angeordnet ist und/oder relativ zu dem jeweils benachbart angeordneten Führungsmittel verlagerbar angeordnet ist. Dies erleichtert die Anpassung der Lage der zu erwärmenden Zone des Beschichtungsmaterials, insbesondere bei wechselnden Materialien bzw. wechselnden Größen.

Die Aufgabe zu dem Verfahren wird mit den Merkmalen von Anspruch 13 oder 14 gelöst.

Ein Ausführungsbeispiel der Erfindung betrifft ein Verfahren zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks, mit einer Mikrowellenquelle und mit einem Applikator,
- wobei in der Mikrowellenquelle eine Mikrowellenstrahlung erzeugt wird, welche dem Applikator zugeführt wird,
- wobei in dem Applikator ein Mikrowellenfeld aufgrund der zugeführten Mikrowellenstrahlung erzeugt wird,
- wobei das Beschichtungsmaterial durch den Applikator durchgeführt wird, insbesondere durch einen Materialkanal, welcher den Applikator durchquert,
- so dass die Funktionsschicht des Beschichtungsmaterials im Mikrowellenfeld innerhalb des Applikators erwärmt wird,
- wobei eine Führungsvorrichtung mit einem ersten Führungsmittel und gegebenenfalls mit einem zweiten Führungsmittel vorgesehen ist, wobei das Beschichtungsmaterial entlang des zumindest einen Führungsmittels durch den Applikator verlagerbar geführt wird, wobei zumindest eine Zusatzwärmequelle benachbart zu zumindest einem Führungsmittel angeordnet ist, um das Beschichtungsmaterial zusätzlich lokal zu erwärmen.

Ein Ausführungsbeispiel der Erfindung betrifft auch ein Verfahren zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks, mit einer Mikrowellenquelle und mit einem Applikator,
- wobei in der Mikrowellenquelle eine Mikrowellenstrahlung erzeugt wird, welche dem Applikator zugeführt wird,
- wobei in dem Applikator ein Mikrowellenfeld aufgrund der zugeführten Mikrowellenstrahlung erzeugt wird,
- wobei das Beschichtungsmaterial durch den Applikator durchgeführt wird, insbesondere durch einen Materialkanal, welcher den Applikator durchquert,
- so dass die Funktionsschicht des Beschichtungsmaterials im Mikrowellenfeld innerhalb des Applikators erwärmt wird,
- wobei eine Führungsvorrichtung mit einem ersten Führungsmittel und gegebenenfalls mit einem zweiten Führungsmittel vorgesehen ist, wobei das Beschichtungsmaterial entlang des zumindest einen Führungsmittels durch den Applikator verlagerbar geführt wird, wobei zumindest eine Zusatzwärmequelle zur lokalen Erhöhung des Absorptionskoeffizienten ε" vorgesehen ist, so dass das Beschichtungsmaterial im Mikrowellenfeld lokal stärker erwärmt wird.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Figur 1: eine Ansicht einer erfindungsgemäßen Vorrichtung zur Erwärmung einer Funktionsschicht,
- Figur 2: eine seitliche Ansicht eines Applikators,
- Figur 3: eine Ansicht eines Applikators von oben,
- Figur 4: eine Ansicht eines Applikators von hinten,
- Figur 5: eine Ansicht eines Applikators von vorn,
- Figur 6: eine seitliche Ansicht eines Applikators,
- Figur 7: eine Ansicht eines Applikators von oben,
- Figur 8: eine Ansicht eines Applikators von hinten,
- Figur 9: eine Ansicht eines Applikators von vorn,
- Figur 10: eine Ansicht eines Applikators von oben,
- Figur 11: eine seitliche Ansicht eines Applikators,
- Figur 12: eine seitliche Ansicht eines Applikators,
- Figur 13: eine Ansicht eines Applikators von oben,
- Figur 14: eine Ansicht eines teilweise demontierten Materialkanals mit Führungsmitteln,
- Figur 15: ein Diagramm zur Darstellung von Temperaturverläufen der Funktionsschicht des Beschichtungsmaterials als Funktion der Höhe zwischen den Führungsmitteln, gemessen an der Fügestelle des Beschichtungsmaterials und des Werkstückes,
- Figur 16: eine Darstellung mit einer schematischen Aufteilung des Beschichtungsmaterialbands in Höhenrichtung,
- Figur 17: eine Darstellung eines Führungsmittels mit einem Beschichtungsmaterial im Schnitt,
- Figur 18: eine Darstellung eines Applikators im Schnitt,
- Figur 19: eine Ansicht eines teilweise demontierten Materialkanals mit Führungsmitteln zur Darstellung einer günstigen Position für die Anordnung von Zusatzwärmequellen,
- Figur 20: ein Diagramm zur Darstellung von Temperaturverläufen der Funktionsschicht mit einer gegenüber Figur 15 ergänzten Kurve zur Darstellung unter Anwendung von Zusatzwärmequellen ,
- Figur 21: eine Darstellung eines Führungsmittels mit Zusatzwärmequelle mit einem Beschichtungsmaterial im Schnitt,
- Figur 22: eine Ansicht eines teilweise demontierten Materialkanals mit Führungsmitteln zur Darstellung von Positionen für die Anordnung von Zusatzwärmequellen,
- Figur 23: eine schematische Darstellung eines Führungsmittels mit Zusatzwärmequelle und mit einer Teilansicht eines Beschichtungsmaterials in einem ersten Betriebszustand,
- Figur 24: eine schematische Darstellung eines Führungsmittels mit Zusatzwärmequelle und mit einer Teilansicht eines Beschichtungsmaterials in einem zweiten Betriebszustand,
- Figur 25: eine schematische Darstellung eines Führungsmittels mit Zusatzwärmequelle und mit einer Teilansicht eines Beschichtungsmaterials in einem dritten Betriebszustand,
- Figur 26: eine schematische Darstellung eines Führungsmittels mit Zusatzwärmequelle und mit einer Teilansicht eines Beschichtungsmaterials in einem vierten Betriebszustand,
- Figur 27: eine schematische Darstellung eines Führungsmittels mit Zusatzwärmequelle und mit einer Teilansicht eines Beschichtungsmaterials in einem fünften Betriebszustand,
- Figur 28: eine schematische Darstellung eines Führungsmittels mit Zusatzwärmequelle und mit einer Teilansicht eines Beschichtungsmaterials in einem sechsten Betriebszustand, und
- Figur 29: ein Diagramm der Koeffizienten ε' und ε" von TPU als Funktion der Temperatur.

### Bevorzugte Ausführung der Erfindung

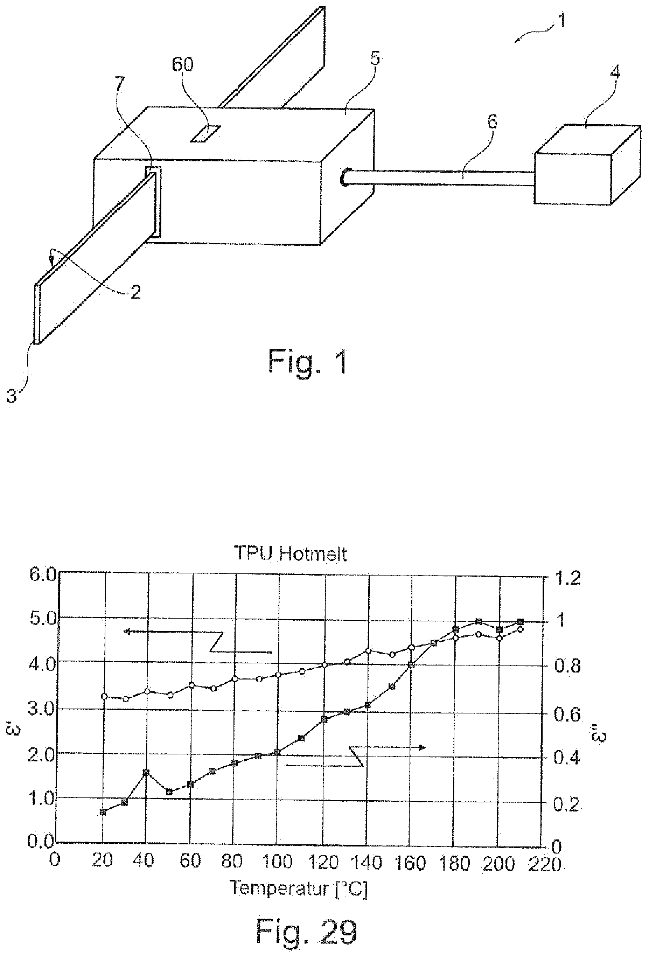

Figur 1 zeigt in einer schematischen Darstellung eine erfindungsgemäße Vorrichtung 1 zur Erwärmung einer Funktionsschicht 2 eines Beschichtungsmaterials 3. Dabei wird der Begriff Erwärmung einer Funktionsschicht auch als Aktivierung einer Funktionsschicht verstanden. Diese Begriffe werden im Weiteren als gleichwertig bzw. gleichbedeutend verwendet. Die Figur 1 zeigt die Funktionsschicht auf einer Seite des Beschichtungsmaterials, sie kann jedoch ebenso auch auf der anderen Seite des Beschichtungsmaterials angeordnet sein.

Dabei ist das Beschichtungsmaterial insbesondere ein Kantenband, welches auf ein Werkstück an einer Schmalseite aufbringbar ist oder insbesondere ein eher flächiges Beschichtungsmaterial, welches auch auf eine eher flächige Breitseite eines Werkstücks aufbringbar ist.

Die Erwärmung oder Aktivierung der Funktionsschicht 2 dient dem Aufbringen und insbesondere dem dauerhaften Befestigen des Beschichtungsmaterials 3 auf einer Fläche des Werkstücks. Dabei wird die Funktionsschicht derart aktiviert, dass sie eine Art Kleber bildet oder bewirkt, mittels welchem das Beschichtungsmaterial auf der Fläche des Werkstücks verklebbar ist.

Die Vorrichtung 1 weist eine Mikrowellenquelle 4 und einen Applikator 5 auf, wobei die Mikrowellenstrahlung mittels eines optionalen Mikrowellenkanals 6 von der Mikrowellenquelle 4 zum Applikator 5 übertragen wird. Der Mikrowellenkanal kann gegebenenfalls auch in die Mikrowellenquelle oder in den Applikator integriert sein oder ggf. auch entfallen.

Der Mikrowellenkanal 6, welcher bevorzugt als Hohlleiter oder als Koaxialkabel ausgebildet ist, dient der Zuführung der in der Mikrowellenquelle 4 erzeugten Mikrowellenstrahlung zu dem Applikator 5. In dem Applikator 5 wird dadurch ein Mikrowellenfeld erzeugt, welches von dem Beschichtungsmaterial 3 durchlaufen wird.

Der Applikator 5 weist dazu optional zumindest einen Materialkanal 7 auf, welcher das Mikrowellenfeld quert, und durch welchen das Beschichtungsmaterial geführt wird. Dabei kann der Materialkanal 7 offen ausgebildet oder geschlossen ausgebildet sein. Bei der offenen Ausführung kann der Materialkanal auch im Applikator integriert und von diesem selbst ausgebildet sein.

Das Mikrowellenfeld ist dabei derart ausgebildet oder ansteuerbar, dass beim Durchlaufen des Beschichtungsmaterials durch das Mikrowellenfeld die Funktionsschicht des Beschichtungsmaterials erwärmt oder aktiviert wird.

Das Beschichtungsmaterial besteht dabei zumindest aus zwei Schichten, wovon eine Schicht die Funktionsschicht ist, welche erwärmt bzw. aktiviert wird, wobei die zumindest eine andere Schicht, welche im Nachfolgenden als Dekorschicht bezeichnet wird, je nach Anwendungsfall möglichst nicht oder auf 40°C bis 70°C erwärmt wird.

Die Funktionsschicht und die Dekorschicht können jeweils auch aus einem entsprechenden eigenen Schichtaufbau aus mehreren einzelnen Schichten bestehen. So können die Funktionsschicht und/oder die Dekorschicht des Beschichtungsmaterials aus zumindest einer Schicht oder aus einer Mehrzahl von Schichten bestehen.

Die Funktionsschicht und die Dekorschicht weisen jeweils einen Verlustfaktor ε"_{eff} auf, welcher als Verlustfaktor des jeweiligen Materials der Funktionsschicht und der Dekorschicht betrachtet wird. Dabei ist der Verlustfaktor der Imaginärteil der komplexen relativen Dielektrizitätskonstante ε" des jeweiligen Materials.

Dabei wird der Verlustfaktor ε"_{eff} (FS) der Funktionsschicht oder der Verlustfaktor ε"_{eff} (DS) der Dekorschicht für Frequenzen (ISM) bei 915 MHz, 2,45 GHz oder 5,8 GHz angegeben.

Das Verhältnis R = ε'_{eff} (FS) / ε'_{eff} (DS) bei einer der angegebenen Frequenzen von 915 MHz, 2,45 GHz oder 5,8 GHz definiert das Verhältnis der Verlustfaktoren.

Dabei ist das Beschichtungsmaterial derart spezifiziert, dass R > 1, vorzugsweise R > 10 gilt. Dies bewirkt, dass sich die Funktionsschicht FS wesentlich stärker erwärmt als die Dekorschicht DS des Beschichtungsmaterials, so dass es zu einer selektiven Erwärmung des Beschichtungsmaterials kommt, insbesondere bei einer Anwendung von Mikrowellenapplikatoren bei den ISM-Frequenzen von 915 MHz oder 2,45 GHz oder 5,8 GHz. Dabei repräsentieren die genannten ISM-Frequenzen jeweils Frequenzbänder mit einer definierten Bandbreite, wie beispielsweise die ISM-Frequenz von 915 MHz repräsentiert den Frequenzbereich von 915 MHz ± 13 MHz.

Insbesondere bei einer Einstellung des Applikators als Applikator mit einer laufenden Welle ist R > 1 und ε"_{eff} (FS) > 1. Bei einem resonanten Applikator ist R > 1 und ε"_{eff} (FS) < 50.

Dabei ist der Applikator von der Mikrowellenquelle mit Mikrowellenstrahlung einer Leistung von 0,1 kW bis etwa 50 kW beaufschlagt. Daraus resultiert je nach Verlustfaktor des jeweiligen Materials eine Erwärmung des jeweiligen Materials der Funktionsschicht bzw. der Dekorschicht. Die Erwärmung der Funktionsschicht ist dabei größer als die Erwärmung der Dekorschicht, so dass die Dekorschicht nicht oder gegebenenfalls nur geringfügig erwärmt wird, während die Funktionsschicht auf Prozesstemperatur erwärmt wird.

Werden mehrere Applikatoren verwendet, so kann jeder Applikator von der gleichen Mikrowellenquelle gespeist werden oder alternativ kann jeder Applikator von einer separaten Mikrowellenquelle gespeist werden. Auch können Gruppen von Applikatoren oder von Applikatorsegmenten von einer Mikrowellenquelle gespeist werden oder von einer Mehrzahl von Mikrowellenquellen gespeist werden.

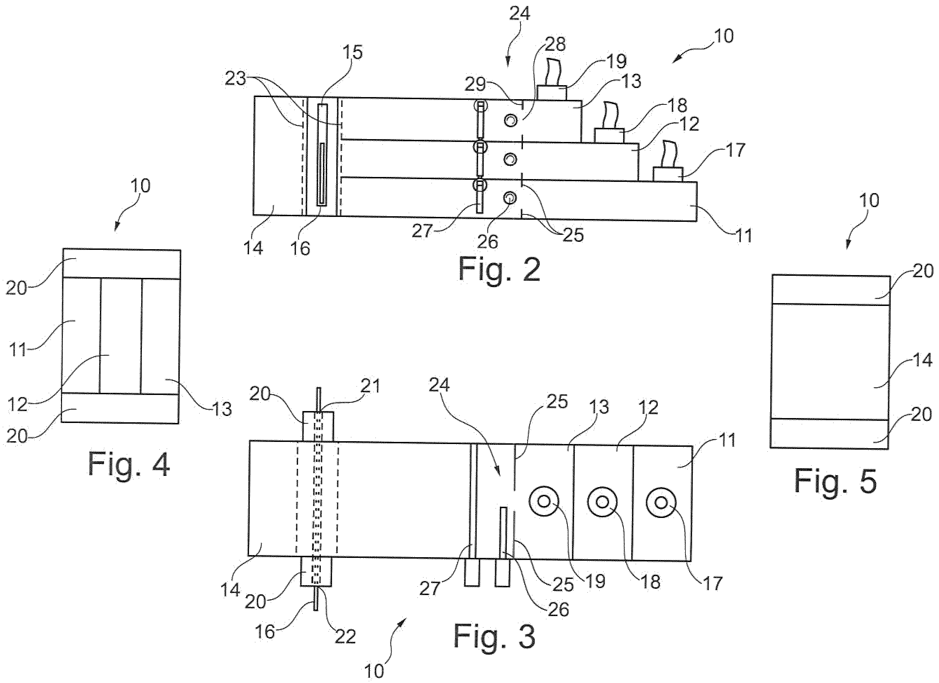

Die Figuren 2 bis 5 zeigen jeweils verschiedene Ansichten eines erfindungsgemäßen Applikators 10 in einer ersten Betriebsstellung. Die Figur 2 zeigt den Applikator in einer Seitenansicht, die Figur 3 in einer Draufsicht von oben, die Figur 4 in einer hinteren Ansicht und die Figur 5 in einer vorderen Ansicht.

Der Applikator 10 weist beispielsweise drei Applikatorsegmente 11, 12, 13 auf, die übereinander angeordnet sind. Er kann aber auch nur ein Applikatorsegment oder zwei Applikatorsegmente oder mehr aufweisen. Die Applikatorsegmente 11, 12, 13 sind Hohlräume, in welche eingangsseitig die Mikrowellenstrahlung eingespeist wird und die in eine Kammer 14 münden, in welcher der Materialkanal 15 vorgesehen ist, welcher einen Kanal bildet, um das Beschichtungsmaterial durch die Kammer 14 führen zu können. In der Kammer 14 bildet sich eine laufende oder eine stehende Welle der Mikrowellenstrahlung aus und kann bei der Durchführung des Beschichtungsmaterials 16 dieses je nach Verlustfaktor erwärmen oder aktivieren.

Die Applikatorsegmente 11, 12, 13 sind dabei übereinander angeordnet und am hinteren Ende abgestuft ausgebildet, so dass der Anschluss eines Mikrowellenkanals 17, 18, 19 auf einer Oberseite des jeweiligen Applikatorsegments 11, 12, 13 möglich ist. Der Mikrowellenkanal 17, 18, 19 ist dabei bevorzugt ein Hohlleiter und/oder ein Koaxialkabel. Dabei kann es vorteilhaft sein, wenn ein Hohlleiter verwendet wird, dass der Hohlleiter in Segmente unterteilt ist.

Seitlich des Materialkanals 15 ist dieser beidseitig mit einer Vorrichtung 20 als Drossel versehen, welche das Austreten der Mikrowellenstrahlung abschwächt oder gänzlich abschirmt. Der Materialkanal 15 ist dabei derart ausgebildet, dass er durch den zumindest einen Applikator 10 und/oder durch das zumindest eine Applikatorsegment 11, 12, 13 verläuft, wobei der Materialkanal 15 eine Einlassöffnung 21 und eine Auslassöffnung 22 aufweist, welche dazu dienen, das Beschichtungsmaterial 16 in den Materialkanal 15 einzulassen und es wieder auszulassen. Der Materialkanal 15 weist dazu eine umlaufende Wand 23 auf, welche den Materialkanal 15 von dem Innenraum bzw. Kammer 14 des Applikators 10 oder von dem Innenraum des jeweiligen Applikatorsegments 11, 12, 13 trennt.

Die Figuren 2 bis 5 zeigen einen Applikator 10 mit drei Applikatorsegmenten 11 bis 13. Alternativ können auch mehrere Applikatoren oder ein oder mehrere Applikatoren vorgesehen sein mit einem oder mehreren Applikatorsegmenten. Dabei kann es vorteilhaft sein, wenn zumindest ein Applikator 10 oder alle Applikatoren ein Applikatorsegment 11, 12, 13 oder eine Mehrzahl von Applikatorsegmenten 11, 12, 13 aufweisen. So kann die Mikrowellenstrahlung auf die jeweiligen Applikatoren oder auf die jeweiligen Applikatorsegmente verteilt werden, so dass die Erwärmung des Beschichtungsmaterials im Materialkanal an die Bedürfnisse angepasst werden kann.

Dabei kann die Verteilung der Mikrowellenstrahlung beispielsweise über die Höhe des Beschichtungsmaterials veränderlich sein. Beispielsweise kann der obere und/oder der untere Rand des Beschichtungsmaterials stärker oder weniger stark erwärmt werden als ein mittlerer Bereich.

Die Figuren zeigen einen Applikator mit einem Materialkanal, der durch den Applikator führt, durch welchen das Beschichtungsmaterial durchgeführt wird. Erfindungsgemäß kann durch den zumindest einen Applikator auch eine Mehrzahl von Materialkanälen geführt sein, die hintereinander und/oder übereinander angeordnet sein können. Dadurch können gleichzeitig mehrere Bänder, Streifen oder Bahnen von Beschichtungsmaterial erwärmt werden. Dies mag bei einer Vorrichtung vorteilhaft sein, bei der gleichzeitig mehrere solcher erwärmter Beschichtungsmaterialien verarbeitet werden. So können gleichzeitig mehrere Werkstücke beschichtet werden oder es kann ein Werkstück an mehreren Seiten beschichtet werden.

In Figur 2 oder 3 ist weiterhin zu erkennen, dass im Applikator bzw. in den Applikatorsegmenten 11, 12, 13 jeweils eine Blende 24 vorgesehen ist. Diese Blende dient dazu, die Form der Resonanzkurve des Applikators bzw. des Applikatorsegments einzustellen. Wenn die Blende 24 größer gestellt wird, verschiebt sich die Charakteristik des Applikators bzw. des Applikatorsegments von einem resonanten System mit stehender Welle zu einem System mit laufender Welle. Die Blende 24 besteht dabei bevorzugt aus einer Art Lochblende 25, welche in ihrem Durchlassquerschnitt veränderlich ist und/oder aus einem veränderlichen Metallelement 26, wie beispielsweise einem metallischen Dorn, welcher der gezielten Beeinflussung der Mikrowellenstrahlung dient.

Sowohl die Lochblende 25 als auch das Metallelement 26 ist/sind dabei bevorzugt verstellbar ausgebildet, um die Charakteristik des Applikators 10 oder des Applikatorsegments 11, 12, 13 auf die jeweiligen Anforderungen einstellen zu können.

Die Blende 24 ist, wie es die Figur 2 zeigt, zwischen der Mikrowellenquelle und dem Applikator oder dem Applikatorsegment oder in dem Applikator oder in dem Applikatorsegment angeordnet. Sie ist bevorzugt der Modulationsvorrichtung 27 vorgeschaltet.

Die Blende 24 als Lochblende 25 weist dabei eine Öffnung 28 auf, insbesondere eine Öffnung 28 in einer Metallwandung 29. Dabei ist bevorzugt der Öffnungsquerschnitt der Öffnung 28 der Blende veränderlich einstellbar.

Auch das als Blende wirkende Metallelement 26, welches in die Öffnung des Applikatorsegments ragt, ist bevorzugt einstellbar. Dabei kann der Grad des Hineinragens, also die Eindringtiefe des Metallelements in die Öffnung, einstellbar sein.

Das Metallelement 26 ist bevorzugt der Lochblende 25 nachgeordnet. Alternativ könnte es jedoch auch der Lochblende 25 vorgeschaltet sein. Dabei könnte ein Metallelement vorgesehen sein oder es können alternativ auch mehrere Metallelemente vorgesehen sein. Das bzw. diese können innerhalb und/oder außerhalb des Applikators angeordnet sein.

Vorteilhaft ist das Metallelement ein Metallbolzen, der in das Applikatorsegment hineinragt.

Weiterhin ist in den Figuren 2 und 3 zu erkennen, dass in zumindest einem Applikator 10 und/oder in zumindest einem Applikatorsegment 11, 12, 13 eine Modulationsvorrichtung 27 zur Einstellung der Modulation der Mikrowellenstrahlung vorgesehen ist. Die Modulationsvorrichtung 27 ist dabei als Art Klappe ausgebildet, welche die Mikrowellenstrahlung derart beeinflusst, dass sie die Resonanzfrequenz des Resonators des Applikators bzw. des Applikatorsegments 11, 12, 13 an die Resonanzfrequenz des Magnetrons, also der Mikrowellenquelle, anpasst.

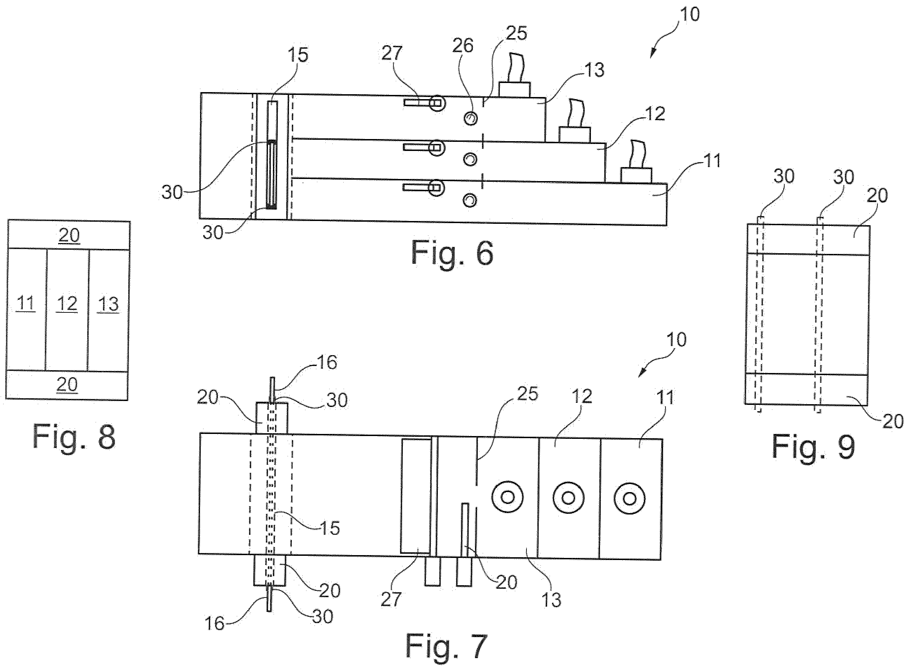

In den Figuren 2 und 3 ist die Modulationsvorrichtung 27 als Art Klappe ausgebildet. Diese Modulationsvorrichtung 27 ist in den Figuren 2 und 3 nach unten eingestellt. In den Figuren 6 und 7 ist die Modulationsvorrichtung 27 nach oben geklappt eingestellt.

In den Figuren 2 und 3 ist der zumindest eine Materialkanal 15 in dem Applikator 10 oder alternativ auch in dem Applikatorsegment feststehend angeordnet, wobei das Mikrowellenfeld veränderlich in dem Applikator 10 und/oder in dem Applikatorsegment einstellbar ist.

Alternativ dazu kann der zumindest eine Materialkanal 15 in dem Applikator 10 oder in dem Applikatorsegment auch verlagerbar einstellbar sein, um das Beschichtungsmaterial in dem Mikrowellenfeld einstellen zu können. Dabei ist der Materialkanal und/oder das Mikrowellenfeld derart einstellbar, dass eine Funktionsschicht des Beschichtungsmaterials in einem Bereich maximaler elektrischer Feldstärke anordenbar oder in diesem Bereich durchführbar ist.

Das Beschichtungsmaterial wird dabei mittels eines Antriebs durch den Materialkanal geführt. Dabei kann der Antrieb an dem Applikator angebracht oder diesem zugeordnet sein. Alternativ kann der Antrieb auch ein Antrieb einer Vorrichtung sein, die das Beschichtungsmaterial auf das Werkstück aufbringt. So kann der Antrieb Teil einer Kantenverleimvorrichtung sein, wenn das Beschichtungsmaterial beispielsweise eine Kante ist, die auf die Schmalseite eines Werkstücks aufgebracht werden kann. Dabei kann dem Applikator auch eine Andruckvorrichtung nachgeordnet werden, um das Beschichtungsmaterial auf das Werkstück zu applizieren und dort anzupressen.

In den Figuren 2 und 3 sind die Applikatorsegmente 11, 12, 13 in der Höhe gleich ausgebildet. Alternativ kann ein Applikator 10 auch in mehrere Applikatorsegmente 11, 12, 13 unterteilt sein, wobei die Applikatorsegmente 11, 12, 13 auch unterschiedliche geometrische Abmessungen bzw. Höhen aufweisen können. Dabei kann ein Applikator in mehrere Applikatorsegmente unterteilt sein, wobei sich zumindest einzelne der Applikatorsegmente in der Höhe und/oder in der Breite unterscheiden können. Dadurch kann der Energieeintrag in das Beschichtungsmaterial als Funktion der Höhe bzw. Breite moduliert werden.

Zur Modulation der Erwärmung bzw. der Aktivierung des Beschichtungsmaterials kann es auch vorteilhaft sein, wenn der Applikator oder die Applikatoren oder das Applikatorsegment oder die Applikatorsegmente austauschbar sind. So können die Applikatoren oder die Applikatorsegmente in verschiedenen Höhen oder Breiten eingesetzt werden, um an das Beschichtungsmaterial angepasst zu sein.

Der Materialkanal 15 ist als durchgehender Spalt mit einer umlaufenden Wand 23 ausgebildet. Dabei ist der Materialkanal 15 aus einem Material hergestellt, welches zumindest eines der folgenden Materialen ist oder eines der Materialien aufweist: PTFE, Keramik, Glas, Technisches Glas, Al₂O₃, Kieselglas, SiO₂, Fused Silica, Fused Quarz, Aluminiumoxid, Siliziumoxid. Dabei kann der Materialkanal 15 beispielsweise aus PTFE, wie Teflon, hergestellt sein und als PTFE-Block in den Applikator 10 eingesetzt sein.

Auch kann der Materialkanal 15 innen mit einem Material beschichtet sein, welches eines der folgenden Materialen ist oder eines der Materialien aufweist: PTFE, Keramik, Glas, Technisches Glas und/oder Quarzglas.

Auch kann der Applikator 10 oder die Applikatoren oder das Applikatorsegment oder die Applikatorsegmente 11, 12, 13 innen mit einem Material beschichtet oder ausgefüllt sein, welches eines der folgenden Materialen ist oder eines der Materialien aufweist: PTFE, Keramik, Glas, Technisches Glas, Al₂O₃, Kieselglas, SiO₂, Fused Silica, Fused Quarz, Aluminiumoxid, Siliziumoxid.

Die Figuren 6 und 9 zeigen eine Führungsvorrichtung 30 im Materialkanal 15, welche Führungsmittel als Führungsschienen ausgebildet aufweist und welche unten und oben in dem Materialkanal 15 angeordnet sind. Dabei durchqueren die Führungsmittel als Führungsschienen den Materialkanal 15, so dass das Beschichtungsmaterial auf seinem Weg durch den Materialkanal 15 geführt ist. Die beiden Führungsmittel oder im Allgemeinen die Führungsvorrichtung 30 ist auf die Höhe bzw. Breite des Beschichtungsmaterials einstellbar, so dass auch unterschiedlich hohe oder breite Beschichtungsmaterialien, wie beispielsweise Bänder, durch den Materialspalt führbar sind. Die Führungsvorrichtung dient der Führung des Beschichtungsmaterials und hat weiterhin den Vorteil, dass in dem Bereich, in welchem das Beschichtungsmaterial in die Führungsvorrichtung eingreift, die Erwärmung nicht so hoch ist als in einem mittleren Bereich. Damit wird erreicht, dass der Randbereich des Beschichtungsmaterials nicht so stark erwärmt wird und damit die Funktionsschicht des Beschichtungsmaterials im Randbereich nicht so pastös oder fluid wird. Die Führungsvorrichtung wird somit von dem Beschichtungsmaterial nicht verschmutzt. Dabei ist der Bereich etwa 0,5 bis 4 mm breit und/oder tief, in welchem das Beschichtungsmaterial in die Führungsvorrichtung eingreift.

Die Führungsvorrichtung kann dabei auch federnd gelagert sein, wie insbesondere die als Führungsschienen ausgebildeten Führungsmittel, um ein Verklemmen des Beschichtungsmaterials zu vermeiden.

Auch kann die Führungsvorrichtung, wie die obere und/oder die untere Führungsschiene, an eine Spülvorrichtung angeschlossen und mit Kanälen versehen sein, um mit einem Spülmedium, wie Luft, gespült zu werden. So kann auf das Beschichtungsmaterial in seitlicher Richtung und/oder direkt von oben oder unten das Spülmedium beaufschlagt werden, um eine Überhitzung in der Führungsschiene zu vermeiden. Hierzu weisen die Führungsschienen bevorzugt in der unteren Fläche und/oder in der oberen Fläche sowie in den seitlichen Flächen Kanäle auf, durch welche das Spülmedium geleitet werden kann.

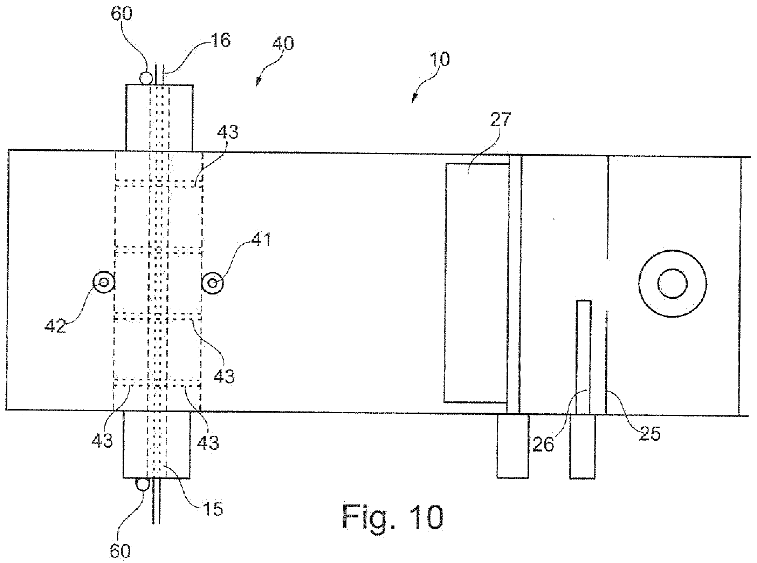

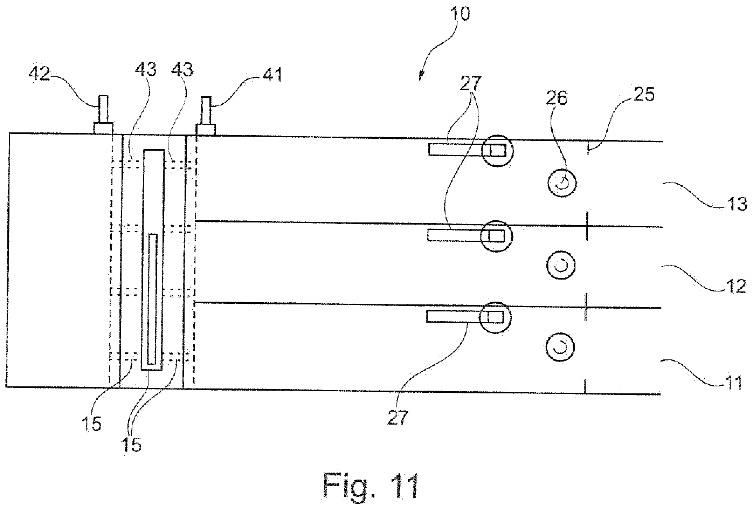

Die Figuren 10 und 11 zeigen einen Applikator 10 mit einem Materialkanal 15 mit einer Spülvorrichtung 40. Die Spülvorrichtung 40 umfasst einen ersten Spülmediumanschluss 41 und einen zweiten Spülmediumanschluss 42, wobei der erste Spülmediumanschluss 41 und der zweite Spülmediumanschluss 42 dazu dienen, ein Spülmedium anzuschließen. Dieses Spülmedium, wie beispielsweise Luft, wird von den Spülmediumanschlüssen 41, 42 in Kanäle 43 geleitet, die sich verteilen und im Materialkanal 15 münden, um den Materialkanal 15 und das Beschichtungsmaterial 16 im Materialkanal 15 zu spülen. Die Spülvorrichtung ist ein optionales Merkmal, das mit den Merkmalen der anderen Ausführungsbeispiele nutzbar ist.

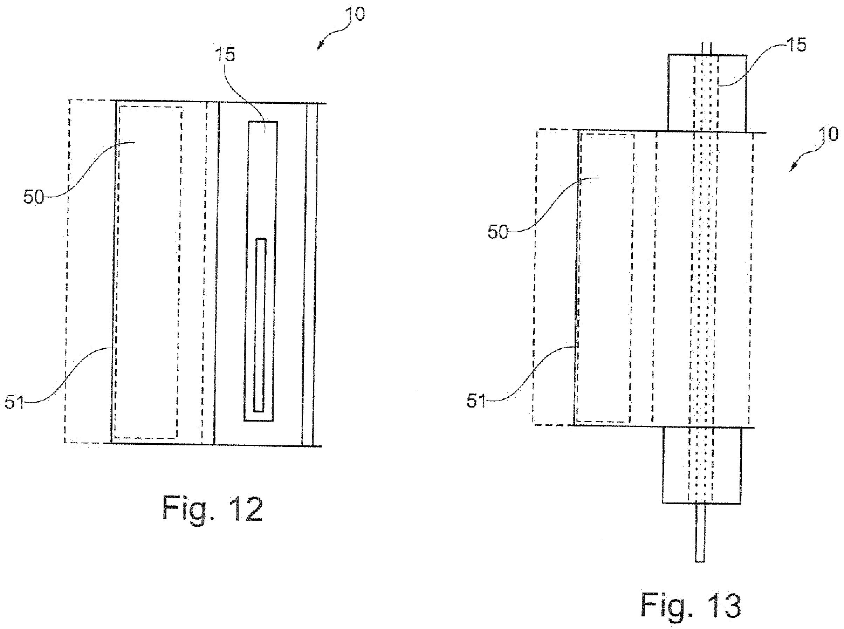

Die Figuren 12 und 13 zeigen einen Endbereich des Applikators 10, bei welchem eine Füllung 50 vorgesehen ist, um die dielektrischen Eigenschaften des Resonators 51 zu beeinflussen. Dadurch kann der Resonator 51 und der Applikator 10 im Ganzen kleiner ausgeführt werden, da die Füllung das Mikrowellenfeld derart ändert, dass eine kleinere Baulänge bei geeigneter Füllung 50 ausreichend ist. Die Füllung ist ein optionales Merkmal, das mit den Merkmalen der anderen Ausführungsbeispiele nutzbar ist.

Besonders bevorzugt ist eine Temperaturmessvorrichtung 60 vorgesehen, siehe Figur 10, welche die Überwachung der Temperatur des Beschichtungsmaterials 16 im Materialkanal 15 und/oder am Eingang und/oder am Ausgang des Materialkanals 15 ermöglicht. Dadurch kann eine Rückkopplung zur Steuerung oder Regelung der Mikrowellenenergie und/oder der Resonanzfrequenz des Applikators oder der Gestalt des Mikrowellenfelds erfolgen. Dazu kann eine Mehrzahl von Temperatursensoren angeordnet sein, welche die Temperatur des Beschichtungsmaterials detektieren. Die Anzahl der Temperatursensoren kann dabei 1 bis 20 oder mehr sein. Dabei ist es besonders vorteilhaft, wenn eine kontinuierliche Messung der Temperatur der Funktionsschicht des Beschichtungsmaterials vorgenommen wird.

Damit kann beispielsweise eine Steuerung oder eine Regelung der Temperatur der Funktionsschicht als Funktion der Ausgangsleistung der Mikrowellenquelle, der Positionen der dielektrischen Funktionselemente und von den Blenden 25 bzw. den Metallelementen 26 vorgenommen werden.

Dabei kann beispielsweise der Sollwert der Temperatur der Funktionsschicht über die Länge des Kantenbandes konstant gehalten werden. Alternativ ist es zweckmäßig, wenn der Sollwert der Temperatur des Beschichtungsmaterials variiert werden kann, wobei die Variation entsprechend eines anwenderspezifischen Profils vorgenommen werden kann.

Die erfindungsgemäße Vorrichtung dient der Erwärmung oder Aktivierung eines Beschichtungsmaterials. Dabei kann der Erwärmungsprozess mittels des Mikrowellenapplikators mit anderen Heizvorrichtungen oder Heizmethoden kombiniert werden. Dabei können diese weiteren Heizvorrichtungen zur Vorwärmung und/oder zur Erreichung bzw. zum Halten der Prozesstemperatur der Funktionsschicht eingesetzt werden. Dabei kann das zu erreichende Temperaturprofil des Beschichtungsmaterials in Prozessrichtung und senkrecht zur Prozessrichtung durch die Kombination der Heizprofile der einzelnen Heizvorrichtungen erzielt werden. Zur Vorwärmung wird die Heizvorrichtung bezogen auf die Vorschubrichtung des Beschichtungsmaterials vor der Mikrowellenheizvorrichtung angeordnet. Dazu sind folgende Heizvorrichtungen geeignet: Die direkte Erwärmung der Funktionsschicht über mechanischen Kontakt mit geheizten mechanischen Bauteilen, Heißluft, IR-, NIR-, VIS-, oder UV-Lampen, LED- oder Laservorrichtungen oder Ultraschall. Zum Erreichen bzw. zum Halten der Prozesstemperatur der Funktionsschicht wird die zusätzliche Heizvorrichtung bezogen auf die Vorschubrichtung des Beschichtungsmaterials nach der Mikrowellenheizvorrichtung angeordnet. Hierzu sind folgende Energiequellen vorteilhaft: Heißluft, IR-, NIR-, VIS-, oder UV-Lampen, LED- oder Laservorrichtungen oder Ultraschall.

Die gezeigten Applikatoren können einzeln oder in Gruppen verwendet werden. Auch können die Applikatoren einzelne Applikatorsegmente oder Gruppen davon aufweisen. Dabei können sich die Applikatorsegmente eines Applikators in der Höhe unterscheiden, um eine optimale Erwärmung von verschieden hohen Beschichtungsmaterialien, die beispielsweise als Bänder ausgebildet sind, erreichen zu können. Die Anzahl der Applikatoren liegt vorzugsweise zwischen 1 und 20 oder mehr. Die Anzahl der Applikatorsegmente liegt vorzugsweise zwischen 1 und 20 oder mehr.

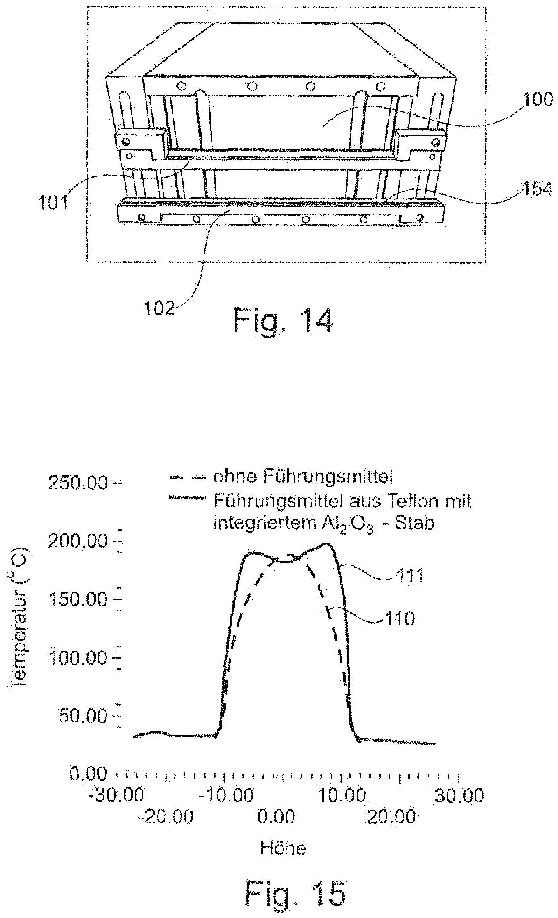

Die Figur 14 zeigt einen Materialkanal 100 mit einem oberen Führungsmittel 101 und mit einem unteren Führungsmittel 102. Dazwischen kann von rechts nach links oder umgekehrt beispielsweise ein Band eines Beschichtungsmaterials durchgeführt werden. Dabei führt das obere Führungsmittel 101 das Beschichtungsmaterial oben und das untere Führungsmittel 102 das Beschichtungsmaterial unten, so dass das Beschichtungsmaterial nicht an den Wänden des Applikators oder des Materialkanals berührend vorbei geführt wird und diese verschmutzen könnte.

Der Abstand der Führungsmittel 101, 102 in Höhenrichtung ist vorzugsweise einstellbar, beispielsweise durch Verlagern der Höhenposition des oberen Führungsmittels 101 und/oder des unteren Führungsmittels 102 oder beider Führungsmittel 101, 102. So kann die Höhe des Abstands an die Höhe des zu erwärmenden Beschichtungsmaterials angepasst werden. Grundsätzlich kann dadurch auch die Position der Durchführung des Beschichtungsmaterials relativ zur Höhe des Materialkanals eingestellt werden.

Die Figur 15 zeigt ein Diagramm zur Darstellung von Temperaturverläufen der Funktionsschicht des Beschichtungsmaterials als Funktion der Höhe zwischen den Führungsmitteln gemessen an der Fügestelle des Beschichtungsmaterials und des Werkstückes. Dabei ist eine erste Kurve 110 dargestellt, bei welcher keine Führungsmittel verwendet wurden. Der Temperaturverlauf steigt von dem oberen und vom unteren Rand des Beschichtungsmaterials an und hat in der Mitte des Beschichtungsmaterials, in Höhenrichtung betrachtet, sein Maximum.

Dabei ist auch eine zweite Kurve 111 dargestellt, bei welcher Führungsmittel verwendet sind, die jeweils aus einem Führungskörper und aus Führungsstegen bestehen und der eine Aufnahme mit einem Körper aus beispielsweise Al₂O₃ aufweist, wobei der Führungskörper und die Führungsstege aus Teflon, PTFE bestehen. Der Temperaturverlauf steigt von dem oberen und vom unteren Rand des Beschichtungsmaterials an und bildet jeweils ein lokales randseitiges Maximum, wobei in der Mitte des Beschichtungsmaterials, in Höhenrichtung betrachtet, ein lokales Minimum vorliegt.

Dabei wurde dieses Temperaturprofil an der Fügestelle des Beschichtungsmaterials an dem Werkstück gemessen, das heißt, dass thermische Ausgleichsprozesse bei der Überbrückung der Distanz zwischen Applikatorausgang und Fügestelle bereits stattgefunden haben.

Die Figur 16 zeigt eine schematische Darstellung eines Beschichtungsmaterials 120 in Höhenrichtung, also senkrecht zur Vorschubrichtung des Beschichtungsmaterials. Dabei wird das Beschichtungsmaterial in fünf Bereiche aufgeteilt, in einen Mittelbereich und in vier Randzonen A bis D. Dabei ist der Mittelbereich der Bereich, in welchem das Beschichtungsmaterial später mit einem Werkstück verklebbar ist. Der Bereich der Randzonen A und D ist der Bereich, in welchem das Beschichtungsmaterial in den Führungsmitteln geführt ist und die Randzonen B und C sind ein Übergangsbereich. Der Mittelbereich soll dabei beispielhaft für eine TPU basierende Funktionsschicht möglichst eine Temperatur im Bereich von etwa 170° C bis etwa 200° C aufweisen, so dass die Funktionsschicht soweit aufschmilzt, dass sie damit verklebbar ist. In den beiden Randschichten A und D sollte die Temperatur gering sein, beispielsweise bis etwa 80° C, so dass die Bereiche, die in die Führungsmittel eingreifen, nicht aufgeschmolzen sind. Die Randzonen B und C nehmen eine Übergangstemperatur an, die aber auch höher sein kann, als im Mittelbereich, siehe Figur 15.

Die Figur 17 zeigt ein Führungsmittel 150 mit einem Beschichtungsmaterial 160 im Schnitt. Das Beschichtungsmaterial 160 weist eine Dekorschicht und eine Funktionsschicht 161 auf. Das Führungsmittel 150 weist einen Führungskörper 151 und zwei von dem Führungskörper 151 abragende Führungsstege 152, 153 auf. Zwischen den Führungsstegen 152, 153 ist eine Führungsnut 154 ausgebildet, in welche der Rand des Beschichtungsmaterials 160 eingreift und geführt wird. Die Höhe der Führungsstege in Höhenrichtung h ist auf beiden Seiten einlaufseitig gleich. Auslaufseitig reduziert sich die Höhe des Führungsstegs 152, der auf der Seite der Funktionsschicht 161 angeordnet ist. Es ist zu erkennen, dass die Höhe des Führungsstegs bei etwa 40% der Länge oder anderweitig reduziert ist. Alternativ kann die Höhe des Führungsstegs 152 auch auf voller Länge reduziert sein.

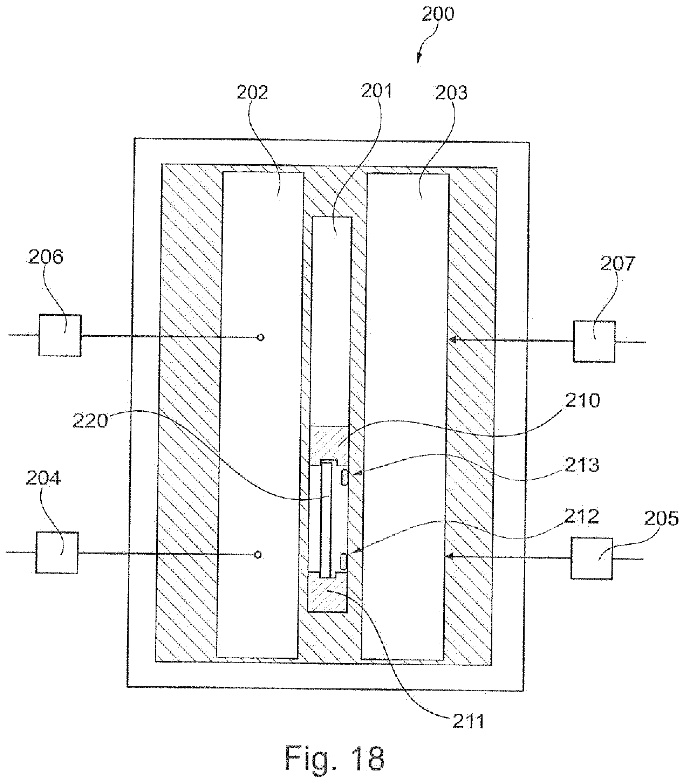

Die Figur 18 zeigt eine Schnittansicht eines Applikators 200. Dieser weist einen Materialkanal 201 aus. Beiderseits des Materialkanals 201 kann ein dielektrisches Funktionselement 202, 203 angeordnet werden, wobei zumindest eines der dielektrischen Funktionselemente verlagerbar ausgebildet ist und entsprechend positionierbar angeordnet werden kann.

Zur Verlagerung bzw. Positionierung ist zumindest ein Antrieb 204, 205 vorgesehen, welcher die Verlagerung des ersten dielektrischen Funktionselements und/oder des weiteren dielektrischen Funktionselements vornimmt. Dabei können die beiden Funktionselemente über eine Führung miteinander verbunden bzw. gekoppelt sein. Auch kann jeweils ein Antrieb vorgesehen sein zur Verlagerung des ersten dielektrischen Funktionselements und/oder des weiteren dielektrischen Funktionselements. Dabei kann der Antrieb auch mit einer besagten Modulationsvorrichtung gekoppelt sein.

Besonders vorteilhaft ist es, wenn das erste und/oder das weitere dielektrische Funktionselement 202, 203 derart verlagerbar ist bzw. sind, dass es bzw. sie parallel zu einem Beschichtungsmaterial im Materialkanal ausrichtbar und anordenbar ist bzw. sind. Dabei kann auch eine Schrägstellung ermöglicht werden, wenn das Beschichtungsmaterial schräg durch den Materialkanal verläuft.

Auch ist es vorteilhaft, wenn eine Messvorrichtung 206, 207 vorgesehen ist zur Messung der Position des ersten dielektrischen Funktionselements 202, 203 und/oder des weiteren dielektrischen Funktionselements 202, 203. Dadurch kann eine automatisierte Regelung bzw. Steuerung vorgenommen werden.

Alternativ ist es auch möglich, dass das erste und/oder das weitere dielektrische Funktionselement 202, 203 Segmente von dielektrischen Funktionselementen aufweist bzw. aufweisen, die unabhängig oder in Gruppen oder gemeinsam verlagerbar sind. Dadurch kann eine dreidimensionale Anordnung erreicht werden, was die Einstellung des Maximums der Feldverteilung erleichtert.

Das dielektrische Funktionselement oder ein Segment eines dielektrischen Funktionselements ist aus einem der folgenden Materialien hergestellt: PTFE, Keramik, Glas, Technisches Glas, Al2O3, Kieselglas, SiO2, Fused Silica, Fused Quarz, Aluminiumoxid, Siliziumoxid.

Mit dem dielektrischen Funktionselement oder mit den dielektrischen Funktionselementen kann oder können aber nicht nur die Position des Maximums der Feldverteilung bestimmt werden. Es kann damit auch die Resonanzfrequenz der Vorrichtung vorteilhaft eingestellt werden. Das dielektrische Funktionselement dient oder die dielektrischen Funktionselemente dienen somit insbesondere dazu, die Resonanzfrequenz einzustellen und mit ihnen kann insbesondere auch die Lage des Maximums der Feldverteilung, insbesondere relativ zum Materialkanal, eingestellt werden.

Die Figur 18 zeigt benachbart zu dem ersten Führungsmittel 211 und benachbart zu dem zweiten Führungsmittel 210 jeweils eine Zusatzwärmequelle 212, 213, die im Applikator 200 benachbart zu dem jeweiligen Führungsmittel 210, 211 angeordnet sind, um das Beschichtungsmaterial 220 zusätzlich lokal zu erwärmen.

Die Figur 18 zeigt, dass eine erste Zusatzwärmequelle 212 und eine zweite Zusatzwärmequelle 213 vorgesehen sind, jeweils benachbart zu dem ersten Führungsmittel 211 und zu dem zweiten Führungsmittel 210. Alternativ dazu kann auch nur eine der beiden Zusatzwärmequellen 212 oder 213 vorgesehen sein.

Die Figur 18 zeigt auch, dass die erste Zusatzwärmequelle 212 und die zweite Zusatzwärmequelle 213 im Materialkanal 201 angeordnet sind. Alternativ dazu kann auch nur eine der beiden Zusatzwärmequellen 212 oder 213 im Materialkanal 201 angeordnet sein.

Dabei erstreckt sich die erste Zusatzwärmequelle 212 und die zweite Zusatzwärmequelle 213 zumindest teilweise entlang des jeweiligen Führungsmittels 211, 210 in einer Vorschubrichtung des Beschichtungsmaterials, in Figur 18 senkrecht zur Blattebene. Alternativ dazu kann sich auch nur eine der beiden Zusatzwärmequellen 212 oder 213 im Materialkanal 201 entsprechend erstrecken.

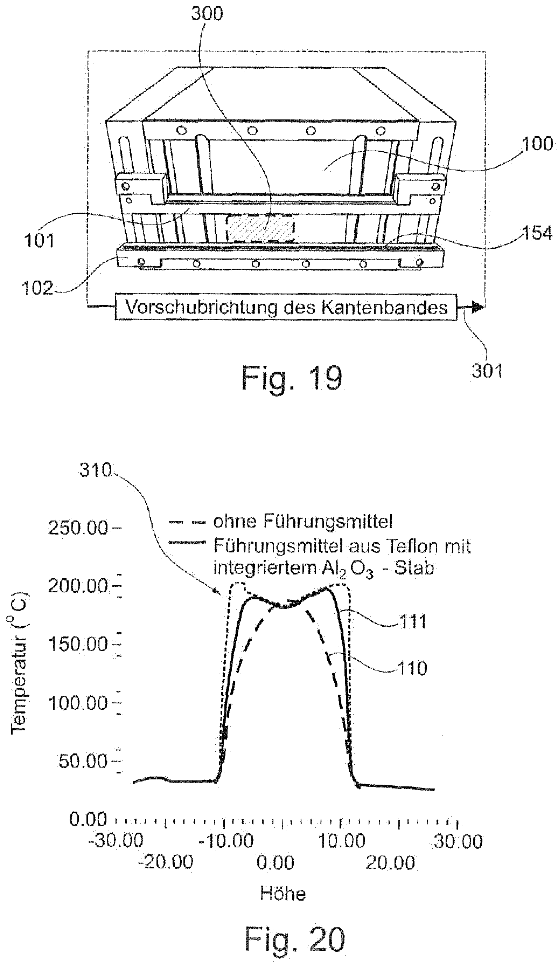

Die Figur 19 zeigt eine Darstellung eines Applikators mit Führungsvorrichtung, wobei mit der Fläche 300 ein Bereich für eine Positionierung der zumindest einen Zusatzwärmequelle andeutet. Dabei ist die erste Zusatzwärmequelle und/oder die zweite Zusatzwärmequelle im Applikator in Vorschubrichtung des Beschichtungsmaterials, siehe Pfeil 301, vor oder etwa in der Position des Maximums des Mikrowellenfeldes angeordnet, vorzugsweise also etwa vor der Hälfte des Applikators, von der Einlaufseite betrachtet oder etwa in der Hälfte des Applikators. So kann beispielsweise Heißluft oder anderweitig Wärme innerhalb der Heizzone des Applikators in den Randzonen B und C gemäß Figur 16, insbesondere vor dem Maximum des elektrischen Feldes in Vorschubrichtung, eingebracht werden bzw. appliziert werden.

Die Figur 20 zeigt in einem Diagramm gemäß Figur 15 eine weitere Kurve eines Temperaturprofils 310, wie es durch Anwendung zweier Zusatzwärmequellen optimiert ist. Dabei ist das Temperaturprofil eines Beschichtungsmaterials, wie Kantenbands, dargestellt. Es zeigt an den beiden Randbereichen im Bereich der Randzonen B, C einen steileren Übergang im Vergleich zu den Kurven 110, 111. Damit wird in den beiden Randzonen B, C bereits eine deutlich höhere Temperatur und ein steilerer Anstieg erreicht, was die Prozesssicherheit deutlich erhöht.

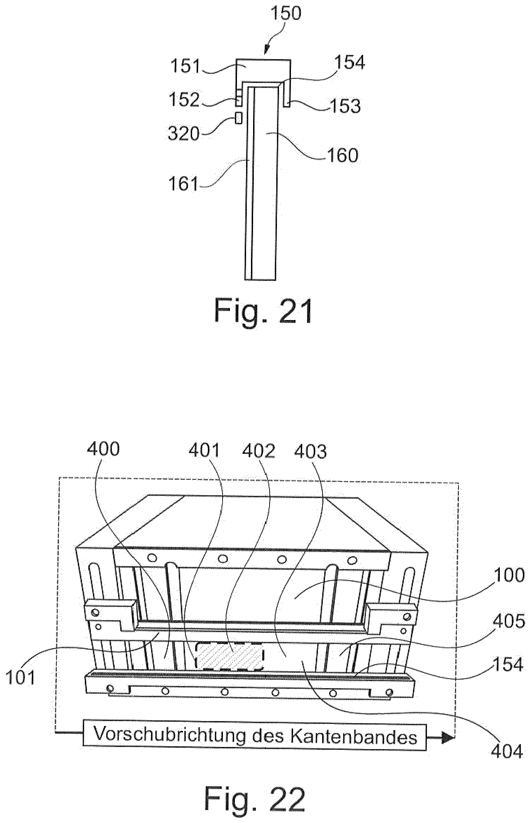

Die Figur 21 zeigt ein Führungsmittel gemäß Figur 17, wobei benachbart des Führungsmittels 150 eine Zusatzwärmequelle 320 angeordnet ist. Diese ist bevorzugt an dem Führungsmittel angeordnet und mit diesem und/oder relativ zu diesem verlagerbar bzw. einstellbar angeordnet. Die Figur 21 zeigt ein oberes Führungsmittel 150, wobei am nicht dargestellten unteren Führungsmittel eine vergleichbare Zusatzwärmequelle angeordnet sein kann, die ebenso mit diesem und/oder relativ zu diesem verlagerbar bzw. einstellbar angeordnet sein kann.

Die Figur 22 zeigt den Applikator gemäß Figur 14 bzw. Figur 19. Dabei bezeichnet die Position 400 eine Position unmittelbar vor dem Mikrowellenheizbereich des Applikators. Die Position 401 bezeichnet eine Position im Heizbereich des Mikrowellenfelds, jedoch vor dem Heizbereich der Zusatzwärmequelle. Die Position 402 bezeichnet eine Position im Heizbereich des Mikrowellenfelds und im Heizbereich der Zusatzwärmequelle. Die Position 403 bezeichnet eine Position im Heizbereich des Mikrowellenfelds und nach dem Heizbereich der Zusatzwärmequelle. Gleiches gilt für die Position 404. Die Position 405 ist eine Position nach dem Heizbereich des Mikrowellenfelds. Dabei sind insbesondere die Positionen 401 und 402 für die Anordnung von Zusatzwärmequellen vorteilhaft.

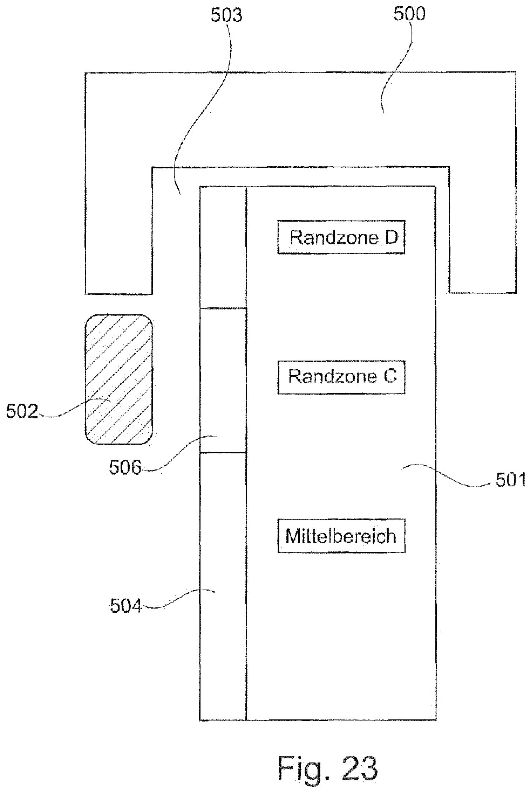

Die Figur 23 zeigt ein Führungsmittel 500 mit einem Teil eines Beschichtungsmaterials 501 mit einer Zusatzwärmequelle 502. Dabei ist die Randzone D im Spalt 503 des Führungsmittels 500 angeordnet. Die Randzone C liegt außerhalb des Spalts 503, quasi gegenüber der Zusatzwärmequelle 502. Der Mittelbereich des Beschichtungsmaterials liegt zwischen den sich gegenüberliegenden Randzonen B und C, entfernt von der Zusatzwärmequelle 502. Dabei ist die Funktionsschicht 504 der Zusatzwärmequelle zugewandt. Dabei zeigt die Figur 23 einen Teilschnitt durch den Applikator unmittelbar vor dem Heizbereich des Mikrowellenfelds und vor dem Heizbereich der Zusatzwärmequelle, mit der Vorschubrichtung des Beschichtungsmaterials in die Zeichnungsebene betrachtet.

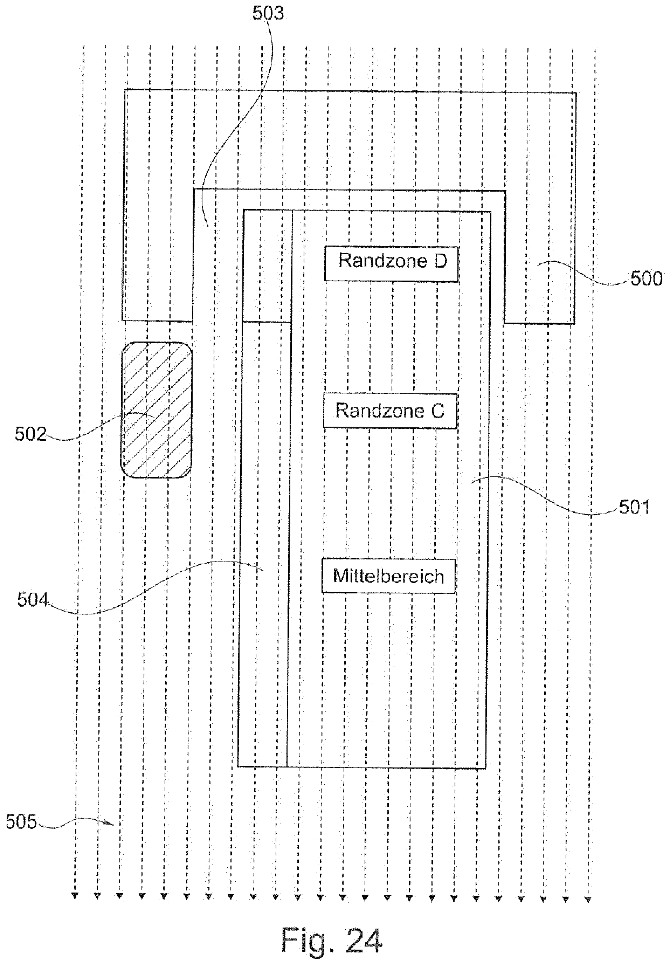

Die Figur 24 zeigt die Anordnung der Figur 23 im vorderen Bereich des Heizbereichs des Mikrowellenfelds und noch vor dem Heizbereich der Zusatzwärmequelle 502. Man erkennt das Mikrowellenfeld 505 durch die gezeigten Linien. Dadurch wird die Funktionsschicht 504 erwärmt.

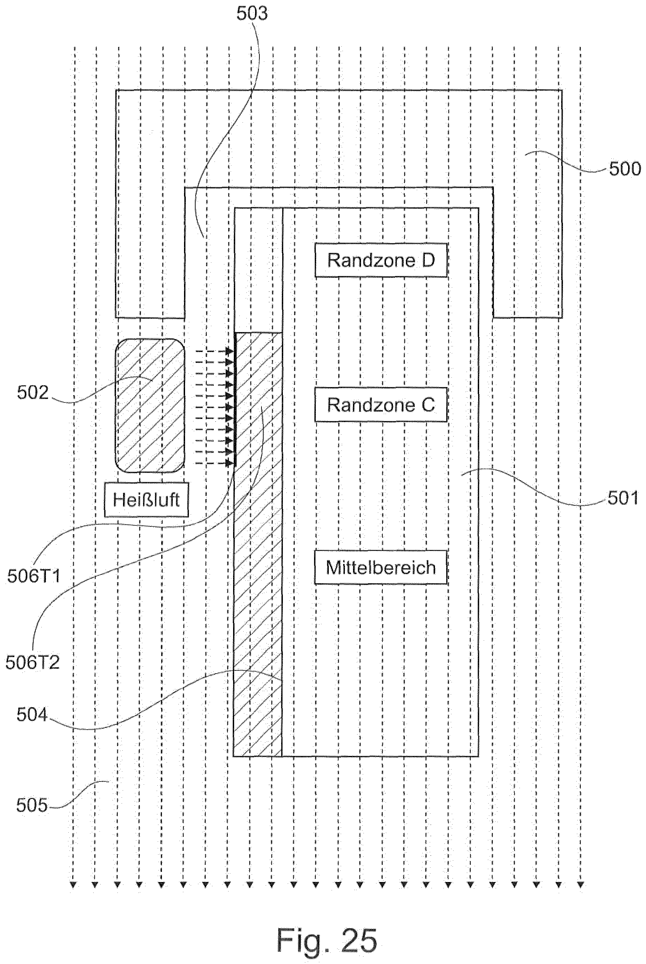

Die Figur 25 zeigt die Anordnung der Figur 23 im Heizbereich des Mikrowellenfelds und im Heizbereich der Zusatzwärmequelle 502. Man erkennt das Mikrowellenfeld 505 durch die gezeigten Linien. Dadurch wird die Funktionsschicht 504 erwärmt, und im Bereich der Zusatzwärmequelle 502 wird die Randzone C 506 oberflächlich weiter erwärmt. Dieser Bereich wird mit 506-T1 bezeichnet. Der Bereich zwischen 506-T1 und dem Beschichtungsmaterial 501 wird mit 506-T2 bezeichnet.

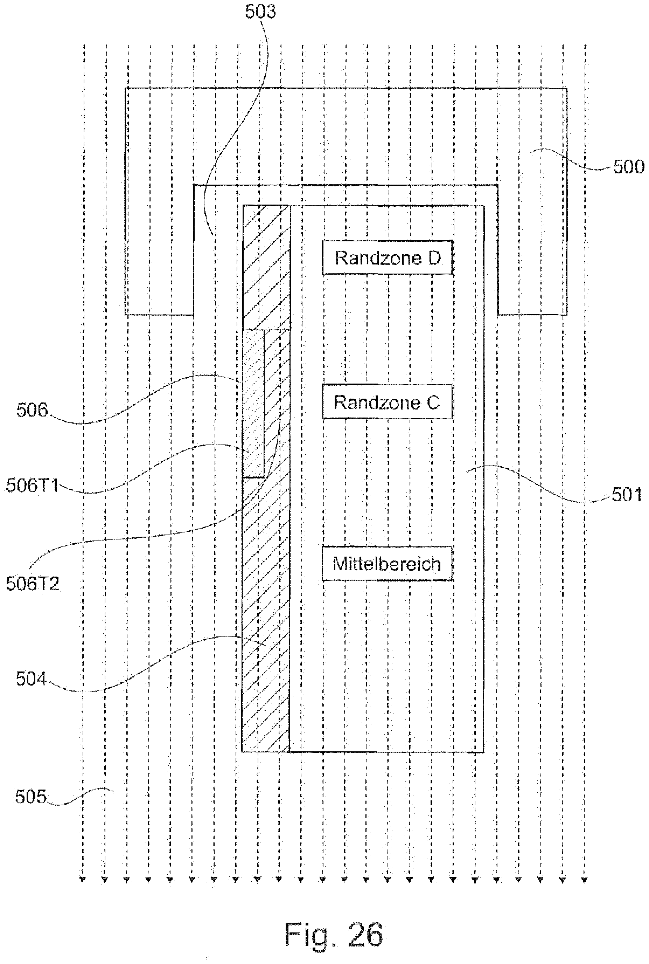

Die Figur 26 zeigt die Anordnung der Figur 23 im Heizbereich des Mikrowellenfelds und nach dem Heizbereich der Zusatzwärmequelle. Man erkennt das Mikrowellenfeld 505 durch die gezeigten Linien. Dadurch wird die Funktionsschicht 504 erwärmt, wobei die Temperatur von Bereich 506-T1 höher ist als die Temperatur von Bereich 506-T2. Damit einhergehend ist, dass ε" von dem Bereich 506-T1 höher als ε" von der Funktionsschicht des Bereichs 506-T2 ist. Durch die Wärmeleitung und den Unterschied in der Erwärmungsrate zwischen dem Bereich 506-T1 und dem Bereich 506-T2 dehnt sich der Bereich 506-T1 in Richtung des Bereichs 506-T2 aus.

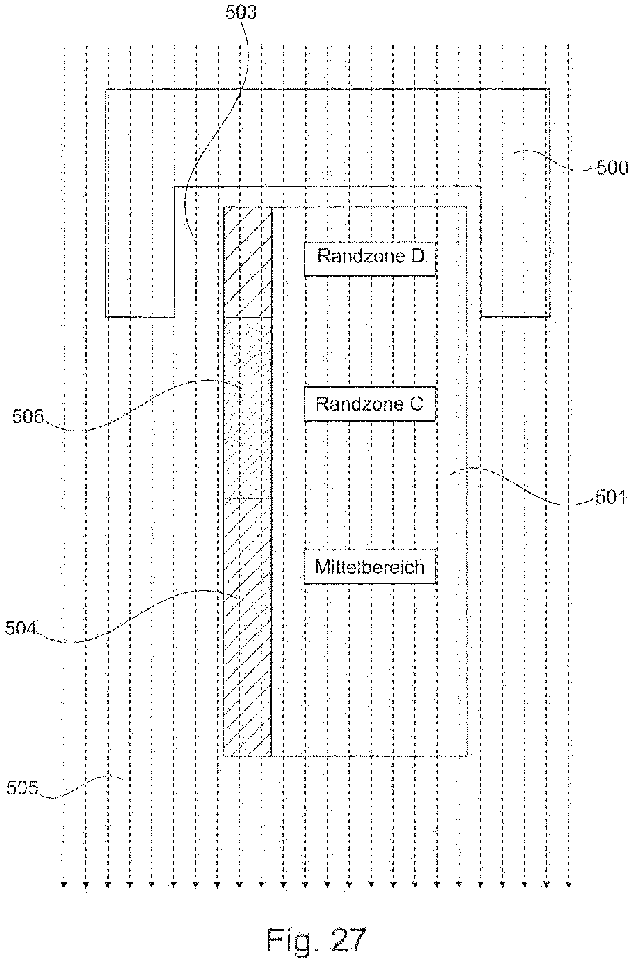

Die Figur 27 zeigt die Anordnung der Figur 23 im Heizbereich des Mikrowellenfelds und noch weiter nach dem Heizbereich der Zusatzwärmequelle 502. Man erkennt das Mikrowellenfeld 505 durch die gezeigten Linien. Dadurch wird die Funktionsschicht 504 erwärmt. Der Bereich 506-T1 hat sich durch die Wärmeleitung und den Unterschied in der Erwärmungsrate zwischen dem Bereich 506-T1 und dem Bereich 506-T2 auf den gesamten Bereich 506 ausgedehnt.

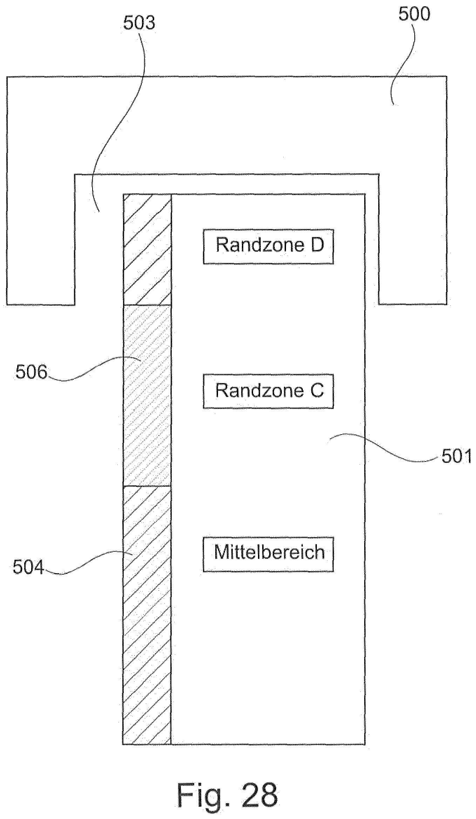

Die Figur 28 zeigt die Anordnung der Figur 23 nach dem Heizbereich des Mikrowellenfelds und nach dem Heizbereich der Zusatzwärmequelle. Man erkennt, dass in der Randzone C die Funktionsschicht stärker erwärmt ist als die Funktionsschicht im Mittelbereich und in dem Randbereich D.

Die Figur 29 zeigt ein Diagramm, bei welchem auf der rechten y-Achse die Kurve der Größe ε" von TPU aufgetragen ist. Auf der linken y-Achse ist die Kurve der Größe ε' aufgetragen. Dabei sind beide Größen jeweils als Funktion der Temperatur im Bereich vom 20 bis 220°C aufgetragen. Man erkennt, dass die Größe ε" mit wachsender Temperatur etwa linear ansteigt. Dabei zeigen die beiden Kurven Messwerte mit Fehlern aufgrund der Messung. Die Abweichungen von einem nahezu linearen Anstieg können beispielsweise auch auf Messfehlern beruhen. Jedenfalls erkennt man, dass die Größe ε" etwa um 0,2 ansteigt, wenn die Temperatur um 50 K angestiegen ist. So kann bei einer Temperaturerhöhung von 15 bis 25 K ein Anstieg der Größe ε" um 0,1 erreicht werden, was eine stärkere Erwärmung im Mikrowellenfeld bewirkt.

Die Zusatzwärmequelle, also die erste Zusatzwärmequelle und/oder die zweite Zusatzwärmequelle ist bevorzugt als Heißluftwärmequelle, als optische Wärmequelle, als Laserlichtquelle, als LED-Lichtquelle, als Lampen, als Lampenanordnung, als Mikrowellenquelle, als Plasmaquelle oder als eine Kontaktwärmequelle ausgebildet.

Die geeignete Heißluftwärmequelle dient der Applikation der Heißluft innerhalb der Heizzone des Applikators auf die Funktionsschicht, insbesondere in den Randzonen B und C, vor dem Maximum des elektrischen Feldes des Mikrowellenfelds in Vorschubrichtung des Beschichtungsmaterials,

Zur Ausführung der Heißluftquelle kann diese aus einem einzelnen oder einer Kombination von Rohren bestehen, wie beispielsweise aus Quarzglas oder Keramik, oder anderen Materialien mit einem relativ geringen ε' und einem sehr geringen ε". Ein geringes ε' ist dabei beispielsweise ein ε' < 4, wobei ein sehr geringes ε" ein ε" < 0,0001 ist. Dabei tritt je nach gewählter Konfiguration die heiße Luft stirnseitig und/oder längsseitig aus dem Rohr bzw. aus den Rohren aus. Die Rohre werden dazu mit einer Heißluftquelle verbunden und mit Heißluft versorgt, die aus zumindest einer Öffnung des Rohrs ausströmt und gegen die Oberfläche der Funktionsschicht strömt und diese dadurch lokal erwärmt.

Der Temperaturbereich der Heißluft liegt vorteilhaft im Bereich von etwa 70°C bis 400°C, bevorzugt von 100°C bis 200°C. Die Luftmenge pro Zusatzwärmequelle beträgt: 1 l/min bis 300 l/min, bevorzugt 20 l/min bis 60 l/min. Der Luftdruck beträgt dabei vorteilhaft nur etwa 1,5 bar bis 10 bar, bevorzugt 2 bar 6 bar. Eine solche Heißluftheizung hätte den weiteren Vorteil, dass eine Spülung des Applikators und/oder des Materialkanals mit der Heißluft erfolgt und Schmutz oder Rauch etc. ausgetragen werden kann.

Bei Verwendung von Heißluft zur zusätzlichen Erwärmung der Funktionsschicht oder für eine Erwärmung durch eine kontaktbasierende Zusatzwärmequelle besteht die Möglichkeit, dass die Zusatzwärmequelle durch Berührung mit der aufgeschmolzenen Funktionsschicht verschmutzt wird, weil die Temperatur der Funktionsschicht größer als eine Grenztemperatur T_{g} ist, oberhalb welcher die Funktionsschicht aufschmilzt oder weich wird, T_{Funktionsschicht} >T_{g}. Besonders günstig wäre daher eine Position für die Anordnung der Zusatzwärmequelle in dem ersten Bereich des Applikators, in dem gilt:
- Das elektrische Feld ist >0.
- Die Funktionsschicht hat eine Temperatur von ca. 40°C - 50°C.
- Die Zusatzwärmequelle erwärmt die Oberfläche der Funktionsschicht von etwa 40°C - 50°C auf 60°C - 70°C, also etwa ein ΔT von 20K.

Wie bereits oben beschrieben ist die Zusatzwärmequelle, also auch die Heißluftzusatzwärmequelle, an dem unteren Führungsmittel vorzugsweise stationär angeordnet, alternativ auch verlagerbar angeordnet. An dem oberen Führungsmittel ist die Zusatzwärmequelle, also auch die Heißluftzusatzwärmequelle, vorzugsweise verlagerbar angeordnet, alternativ auch stationär angeordnet. Dabei bedeutet verlagerbar angeordnet bevorzugt höhenverstellbar und/oder lateral verstellbar angeordnet.

In einer bevorzugten Ausführungsform ist die Position der unteren Zusatzwärmequelle relativ zu der Position des unteren Führungsmittels verschiebbar ausgebildet. In einer bevorzugten Ausführungsform ist die Position der oberen Zusatzwärmequelle relativ zu der Position des oberen Führungsmittels verschiebbar ausgebildet.

Auch kann optional weiterhin eine Applikation von Sperrluft mit Raumtemperatur im Bereich der Führungsmittel zur Vergrößerung des Temperaturgradienten an den Nahtstellen der Randzonen A/B und C/D vorgenommen werden.

### Bezugszeichenliste

- 1: Vorrichtung
- 2: Funktionsschicht
- 3: Beschichtungsmaterial
- 4: Mikrowellenquelle
- 5: Applikator
- 6: Mikrowellenkanal
- 7: Materialkanal
- 10: Applikator
- 11: Applikatorsegment
- 12: Applikatorsegment
- 13: Applikatorsegment
- 14: Kammer
- 15: Materialkanal
- 16: Beschichtungsmaterial
- 17: Mikrowellenkanal
- 18: Mikrowellenkanal
- 19: Mikrowellenkanal
- 20: Vorrichtung
- 21: Einlassöffnung
- 22: Auslassöffnung
- 23: Wand
- 24: Blende
- 25: Lochblende
- 26: Metallelement
- 27: Modulationsvorrichtung
- 28: Öffnung
- 29: Metallwandung
- 30: Führungsvorrichtung
- 40: Spülvorrichtung
- 41: erster Spülmediumanschluss
- 42: zweiter Spülmediumanschluss
- 43: Kanal
- 50: Füllung
- 51: Resonator
- 60: Temperaturmessvorrichtung
- 100: Materialkanal
- 101: Führungsmittel
- 102: Führungsmittel
- 110: erste Kurve
- 111: zweite Kurve
- 120: Beschichtungsmaterial
- 150: Führungsmittel
- 151: Führungskörper
- 152: Führungssteg
- 153: Führungssteg
- 154: Führungsnut
- 160: Beschichtungsmaterial
- 161: Funktionsschicht
- 200: Applikator
- 201: Materialkanal
- 202: Funktionselement
- 203: Funktionselement
- 204: Antrieb
- 205: Antrieb
- 206: Messvorrichtung
- 207: Messvorrichtung
- 210: zweites Führungsmittel
- 211: erstes Führungsmittel
- 212: erste Zusatzwärmequelle
- 213: zweite Zusatzwärmequelle
- 220: Beschichtungsmaterial
- 300: Fläche
- 301: Pfeil
- 310: Temperaturprofil
- 320: Zusatzwärmequelle
- 400: Position
- 401: Position
- 402: Position
- 403: Position
- 404: Position
- 405: Position
- 500: Führungsmittel
- 501: Beschichtungsmaterial
- 502: Zusatzwärmequelle
- 503: Spalt
- 504: Funktionsschicht
- 505: Mikrowellenfeld
- 506: Funktionsschicht in einer Randzone

## Patentansprüche

1. Vorrichtung zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks, mit einer Mikrowellenquelle und mit einem Applikator, wobei in der Mikrowellenquelle erzeugte Mikrowellenstrahlung dem Applikator zuführbar ist, wobei in dem Applikator ein Mikrowellenfeld aufgrund der zugeführten Mikrowellenstrahlung erzeugbar ist, wobei das Beschichtungsmaterial durch den Applikator durchführbar ist, insbesondere durch einen Materialkanal, welcher den Applikator durchquert, so dass die Funktionsschicht des Beschichtungsmaterials im Mikrowellenfeld innerhalb des Applikators erwärmbar ist, wobei eine Führungsvorrichtung mit einem ersten Führungsmittel und gegebenenfalls mit einem zweiten Führungsmittel vorgesehen ist, wobei das Beschichtungsmaterial entlang des zumindest einen Führungsmittels durch den Applikator verlagerbar geführt ist, **dadurch gekennzeichnet, dass** zumindest eine Zusatzwärmequelle im Applikator angeordnet ist, um das Beschichtungsmaterial zusätzlich lokal zu erwärmen.

2. Vorrichtung nach Anspruch 1, **dadurch gekennzeichnet, dass** die zumindest eine Zusatzwärmequelle im Applikator benachbart zu zumindest einem Führungsmittel angeordnet ist,

3. Vorrichtung nach Anspruch 1, **dadurch gekennzeichnet, dass** die zumindest eine Zusatzwärmequelle im Applikator zwischen den beiden Führungsmitteln angeordnet ist,

4. Vorrichtung nach Anspruch 1, 2 oder 3, **dadurch gekennzeichnet, dass** eine erste Zusatzwärmequelle und eine zweite Zusatzwärmequelle vorgesehen sind, jeweils benachbart zu dem ersten Führungsmittel und zu dem zweiten Führungsmittel.

5. Vorrichtung nach Anspruch 4, **dadurch gekennzeichnet, dass** eine dritte Zusatzwärmequelle zwischen dem ersten Führungsmittel und dem zweiten Führungsmittel und zwischen der ersten Zusatzwärmequelle und der zweiten Zusatzwärmequelle angeordnet ist.

6. Vorrichtung nach einem der Ansprüche 1 bis 5, **dadurch gekennzeichnet, dass** die erste Zusatzwärmequelle und/oder die zweite Zusatzwärmequelle im Materialkanal angeordnet ist bzw. sind.

7. Vorrichtung nach einem der Ansprüche 1 bis 6, **dadurch gekennzeichnet, dass** die erste Zusatzwärmequelle und/oder die zweite Zusatzwärmequelle sich zumindest teilweise entlang des jeweiligen Führungsmittels in einer Vorschubrichtung des Beschichtungsmaterials erstrecken.

8. Vorrichtung nach einem der Ansprüche 1 bis 7, **dadurch gekennzeichnet, dass** die erste Zusatzwärmequelle und/oder die zweite Zusatzwärmequelle im Applikator in Vorschubrichtung des Beschichtungsmaterials vor oder etwa in der Position des Maximums des Mikrowellenfeldes angeordnet ist bzw. sind.

9. Vorrichtung nach einem der vorhergehenden Ansprüche, **dadurch gekennzeichnet, dass** die erste Zusatzwärmequelle und/oder die zweite Zusatzwärmequelle als Heißluftwärmequelle, als optische Wärmequelle, als Laserlichtquelle, als LED-Lichtquelle, als Lampen, als Lampenanordnung, als Mikrowellenquelle, als Plasmaquelle oder eine Kontaktwärmequelle ausgebildet ist bzw. sind.

10. Vorrichtung nach Anspruch 9, **dadurch gekennzeichnet, dass** die Heißluftwärmequelle als Heißluftkanal mit zumindest einer Luftaustrittsöffnung ausgeführt ist, so dass aus der zumindest einen Luftaustrittsöffnung Heißluft gegen die Funktionsschicht bzw. gegen das Beschichtungsmaterial strömen kann.

11. Vorrichtung nach zumindest einem der vorhergehenden Ansprüche, **dadurch gekennzeichnet, dass** die erste Zusatzwärmequelle und/oder die zweite Zusatzwärmequelle im Applikator und/oder im Materialkanal stationär angeordnet ist bzw. sind.

12. Vorrichtung nach zumindest einem der vorhergehenden Ansprüche, **dadurch gekennzeichnet, dass** die erste Zusatzwärmequelle und/oder die zweite Zusatzwärmequelle im Applikator und/oder im Materialkanal verlagerbar angeordnet ist bzw. sind, wie insbesondere mit dem jeweils benachbarten Führungsmittel verlagerbar angeordnet ist und/oder relativ zu dem jeweils benachbart angeordneten Führungsmittel verlagerbar angeordnet ist.

13. Verfahren zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks, mit einer Mikrowellenquelle und mit einem Applikator,
- wobei in der Mikrowellenquelle eine Mikrowellenstrahlung erzeugt wird, welche dem Applikator zugeführt wird,
- wobei in dem Applikator ein Mikrowellenfeld aufgrund der zugeführten Mikrowellenstrahlung erzeugt wird,
- wobei das Beschichtungsmaterial durch den Applikator durchgeführt wird, insbesondere durch einen Materialkanal, welcher den Applikator durchquert,
- so dass die Funktionsschicht des Beschichtungsmaterials im Mikrowellenfeld innerhalb des Applikators erwärmt wird,
- wobei eine Führungsvorrichtung mit einem ersten Führungsmittel und gegebenenfalls mit einem zweiten Führungsmittel vorgesehen ist, wobei das Beschichtungsmaterial entlang des zumindest einen Führungsmittels durch den Applikator verlagerbar geführt wird,
**dadurch gekennzeichnet, dass**
zumindest eine Zusatzwärmequelle im Applikator, insbesondere benachbart zu zumindest einem Führungsmittel, angeordnet ist, um das Beschichtungsmaterial zusätzlich lokal zu erwärmen.

14. Verfahren zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks, mit einer Mikrowellenquelle und mit einem Applikator,
- wobei in der Mikrowellenquelle eine Mikrowellenstrahlung erzeugt wird, welche dem Applikator zugeführt wird,
- wobei in dem Applikator ein Mikrowellenfeld aufgrund der zugeführten Mikrowellenstrahlung erzeugt wird,
- wobei das Beschichtungsmaterial durch den Applikator durchgeführt wird, insbesondere durch einen Materialkanal, welcher den Applikator durchquert,
- so dass die Funktionsschicht des Beschichtungsmaterials im Mikrowellenfeld innerhalb des Applikators erwärmt wird,
- wobei eine Führungsvorrichtung mit einem ersten Führungsmittel und gegebenenfalls mit einem zweiten Führungsmittel vorgesehen ist, wobei das Beschichtungsmaterial entlang des zumindest einen Führungsmittels durch den Applikator verlagerbar geführt wird,
**dadurch gekennzeichnet, dass**
zumindest eine Zusatzwärmequelle zur lokalen Erhöhung des Absorptionskoeffizienten ε" vorgesehen ist, so dass das Beschichtungsmaterial im Mikrowellenfeld lokal stärker erwärmt wird.
